# EUROPÄISCHE PATENTSCHRIFT

(11) **EP 3 401 610 B1**
(45) Veröffentlichungstag und Bekanntmachung des Hinweises auf die Patenterteilung: **24.03.2021**
(21) Anmeldenummer: 18171396.7
(22) Anmeldetag: 09.05.2018
(51) Int. Cl.: F24F 5/00, F28D 20/00, F24F 12/00

(54) **WÄRMESPEICHER UND RAUMTECHNISCHE LÜFTUNGSVORRICHTUNG MIT EINEM WÄRMESPEICHER**
HEAT ACCUMULATOR AND VENTILATION DEVICE FOR A ROOM COMPRISING A HEAT ACCUMULATOR
ACCUMULATEUR DE CHALEUR ET DISPOSITIF DE VENTILATION DOTÉ D'UN ACCUMULATEUR DE CHALEUR

(30) Priorität: 12.05.2017 DE 102017110336; 02.08.2017 DE 102017117571
(43) Veröffentlichungstag der Anmeldung: 14.11.2018
(73) Patentinhaber: Aereco GmbH, 65719 Hofheim-Wallau (DE)
(72) Erfinder: Nobis, Volkhard, Dr., 35418 Buseck (DE)
(74) Vertreter: Blumbach · Zinngrebe Patentanwälte PartG mbB

(56) Entgegenhaltungen:
- EP-A1- 3 121 527
- WO-A1-2012/155913
- DE-A1-102011 118 106
- US-A- 5 165 466

## Beschreibung

Die Erfindung betrifft einen Wärmespeicher zur Aufnahme von Wärmeenergie von einem Luftstrom und zur Abgabe von Wärmeenergie an einen Luftstrom einer raumlufttechnischen Lüftungsvorrichtung, wobei der Wärmespeicher zumindest einen Luftführungskanal zur Führung des Luftstroms aufweist.

Die Erfindung betrifft weiterhin eine raumlufttechnische Lüftungsvorrichtung zur Lüftung von Räumen in Gebäuden mit einem solchen Wärmespeicher.

Eine raumlufttechnische Lüftungsvorrichtung mit einem solchen Wärmespeicher ist aus der EP 3 121 527 A1 bekannt. Die darin gezeigte Lüftungsrichtung stellt durch eine Öffnung in einer Gebäudewand eine lufttechnische Verbindung zwischen einem inneren und einem äußeren Bereich eines Gebäudes her. Sie weist einen in seiner Förderrichtung umkehrbaren Ventilator auf, um Luft aus dem Außenbereich in einen Innenraum und umgekehrt zu transportieren. Dabei wird der Luftstrom durch Filter und durch einen Regenerator in Form eines Wärmezwischenspeichers geleitet. Der Wärmezwischenspeicher dient der Wärmerückgewinnung. Dazu wird ein Teil der Wärmeenergie, beispielsweise von aus dem Innenraum nach außen geförderter, warmer Luft, von dem Wärmezwischenspeicher aufgenommen. Bei einem nachfolgenden Betrieb des Ventilators mit umgekehrter Strömungsrichtung wird diese Energie an die vergleichsweise kalte Luft, die beispielsweise aus dem Außenbereich in den Innenraum gefördert wird, abgegeben. Der Regenerator weist typischerweise eine große Oberfläche auf, um die Wärme schnell aufnehmen und abgeben zu können. Dabei kann die Luft in einer Vielzahl dünner Kanäle durch den Regenerator geführt sein. Auch kann der Regenerator aus metallischem Material, einem Fasermaterial, einem erhärtetem Pulvergemisch, einer Tonart, einem Geflecht oder dergleichen gebildet sein. Der Regenerator kann auch ein Latentwärmespeicher-Material enthalten, welches Energie durch einen Phasenübergang im Temperaturbereich zwischen der Außen- und Innentemperatur des zu belüftenden Gebäudes speichert.

Die Druckschrift DE 10 2011 118 106 A1 beschreibt ein Wärmespeichermodul mit den Merkmalen des Oberbegriffs von Anspruch 1, wobei eine ein Arbeitsmedium führende Leitung durch eine Abfolge von thermisch zueinander isolierten Wärmespeicherelementen geführt wird. Das flüssig oder gasförmig vorliegende, temperaturführende Arbeitsmedium überträgt bei einem Ladeprozess Wärmeenergie auf die Wärmespeicherelemente, wobei sich entlang des Strömungsweges eine Temperaturschichtung mit in Strömungsrichtung abfallenden Temperaturen der aufeinanderfolgenden Wärmespeicherelemente ergibt. Bei einem Entladeprozess wird das Wärmespeichermodul in umgekehrter Richtung durchströmt und gibt Wärmeenergie an das Arbeitsmedium. Die das Arbeitsmedium führende Leitungen sind als dünnwandige Rohre oder als durch Leitungsbleche und Abstandshalter begrenzte Kanäle ausgebildet. Die Verwendung von Leitungen oder Kanälen zur Führung des Arbeitsmediums wird als nachteilig erachtet, da verschiedene Bauteile separat gefertigt, zusammengesetzt und in entsprechende Durchbrüche der Wärmespeicherelemente eingesetzt werden müssen. Zudem ergeben sich bestimmte Restriktionen bei der Durchströmung, welche unter bestimmten Bedingungen nachteilig sind.

Die Druckschrift WO 2012/155913 A1 beschreibt ein Lüftungssystem für ein Gebäude oder dergleichen mit einem schwenkbar in einem Kanal gelagerten Ventilator sowie beweglich gelagerten Luftführungselementen. Durch Schwenken des Ventilators kann dessen Förderrichtung umgekehrt werden. Die Bewegung der Luftführungselemente ist an die Schwenkbewegung des Ventilators gekoppelt, so dass beispielsweise bei einer Ausrichtung des Ventilators mit einer Förderrichtung entlang des Kanals dieser freigegeben und bei einer Ausrichtung des Ventilators quer zu dem Kanal dieser teilweise oder vollständig von den Luftführungselementen verschlossen ist. Entlang der Förderstrecke kann ein Wärmetauscher angeordnet sein, der beispielsweise aus einer Anordnung parallel angeordneter Metallplatten aufgebaut ist.

Die bekannten Wärmetauscher und Regeneratoren erstrecken sich von einem dem geheizten Innenraum des Gebäudes zugewandten Bereich bis zu einem der Außenseite des Gebäudes zugewandten Bereich, in dem insbesondere im Winter deutlich niedrigere Temperaturen vorliegen. Die Wärmeleitung solcher Einsätze senkrecht zur Wanderstreckung führt zu Energieverlusten des Wärmetauschers in die Umgebung und verringert obendrein durch das Abweichen vom physikalisch bestmöglichen Betrieb des Gegenstromwärmeübertragers die Übertragungsgrade. Verstärkt werden die Energieverluste dadurch, dass für den Wärmetauscher bzw. den Regenerator zumeist Materialien mit einer hohen Wärmeleitfähigkeit, beispielsweise in Form von Metallen, verwendet werden. Der Wärmetauscher bzw. Regenerator bildet so eine Wärmebrücke zwischen dem Innenraum und dem Außenbereich.

Der Erfindung liegt die Aufgabe zu Grunde, einen vorteilhaften Wärmespeicher zur Aufnahme von Wärmeenergie von einem Luftstrom und zur Abgabe von Wärmeenergie an einen Luftstrom einer raumlufttechnischen Lüftungsvorrichtung zu schaffen.

Mit der Erfindung können möglichst energieeffizient die Luftungswechselenthalpieverluste insbesondere auch unter effizienten Betriebsbedingungen minimiert oder zumindest vermindert werden.

Vorteilhaft können dabei die Luftungswechselenthalpieverluste unter effizienten Betriebsbedingungen materialeffizient minimiert oder zumindest vermindert werden.

Bevorzugt und vorteilhaft kann dabei die jeweilige Wärmespeichermasse möglichst vollumfänglich genutzt werden.

Bevorzugt und vorteilhaft kann die optimierte oder zumindest erhöhte Wärmeübertragung das Verhältnis von Betriebsaufwand in Form von Druckverlusten zu dem wärmetechnischen Nutzen in Form hoher Wärmeübertragungsgrößen minimieren oder zumindest vermindern. Wandorthogonale Wärmeleitung kann vorteilhaft deutlich reduziert und damit die Anwendung des Gegenstromprinzips verbessert werden.

Ebenfalls vorteilhaft können Transmissionsverluste nach außen reduziert werden. Darüber hinaus kann vorteilhaft bei bevorzugten Ausführungsformen durch flexible kundenorientierte Anpassungen die gewünschte Balance zwischen

Wärmerückgewinnungsgraden und der dazu notwenigen Druckänderungsarbeit zu ermöglicht werden. Besonders zur Adaption der Technik an die verschiedenen Klimazonen ist dies sinnvoll. Zusätzlich ist das gezielte teilweise Rückgewinnen der im Luftstrom enthaltenen Feuchte ein weiterer Vorteil besonders bevorzugter Ausführungsformen.

Eine weiterer Vorteil bevorzugter Ausführungsformen umfasst die optimierte akustische Dämpfung von Schallemissionen auf der Gebäudeaußenseite auf dem Weg hin in das Gebäudeinnere .

Zu den genannten Vorteilen der Sicherstellung der hygienisch notwenigen Zugänglichkeit der mit dem Luftstrom in Kontakt befindlichen Flächen kommt die hygienisch vorteilhafte Ausführung dieser Flächen.

Nicht zuletzt kommt der Erfindung die Erweiterung der üblichen Zykluszeiten zwischen dem Umschalten der Strömungsrichtung zu, was sich in einer verringerten Wahrnehmung von Umschalt- und Strömungsgeräuschen zusammenführen lässt. Die 3 dimensionale Gestaltung "12" der luftführenden Kanäle ermöglicht die gezielte Übernahme und Abgabe der Strömung von vor- und nachgeschalteten Komponenten wie eines Ventilators oder Filters. Das Stanzen der einzelnen Schichten erlaubt Strömungskanäle fast beliebiger Ausführung, welche anders nur schwer realisierbar sind. Siehe hierzu auch die prioritätsbegründende Anmeldung DE 10 2017 110 336.8.

Zahlen geben jeweils die Ansprüche und weitere Teile dieser Beschreibung wieder, welche diesen Aspekt noch detaillierter offenbaren.

Die Lösung der Aufgabe wird durch die Merkmale des unabhängigen Anspruchs 1 erreicht, wobei vorteilhafte Weiterbildungen Gegenstand der Unteransprüche und der Beschreibung sind.

Die den Wärmespeicher betreffenden Aspekte der Erfindung werden bei bevorzugten Ausführungsformen vorteilhaft auch dadurch gelöst, dass der Wärmespeicher zwei oder mehrere aufeinanderfolgende Wärmespeicherschichten aufweist, welche vorzugsweise gegeneinander oder in bestimmten Abständen durch jeweils zumindest eine Wärmedämmschicht thermisch isoliert sind, und dass der zumindest eine Luftführungskanal durch zumindest einen Teil der Wärmespeicherschichten und die dazwischen angeordnete Wärmedämmschicht oder Wärmedämmschichten geführt ist. Es ergibt sich so entlang des Luftführungskanals oder der Luftführungskanäle ein Wechsel zwischen Wärmespeicherschichten und Wärmedämmschichten. Der Luftführungskanal bzw. die Luftführungskanäle weisen in ihrer Ausrichtung zumindest eine den Innen- und den Außenbereich verbindende und damit in axialer Richtung des Wärmespeichers verlaufende Komponente auf. Die Schichtung der Wärmespeicherschichten und die Wärmedämmschichten ist somit vorzugsweise ebenfalls axial angeordnet. Ein warmer Luftstrom gibt entlang seines Strömungsweges durch den Wärmespeicher einen Teil seiner Wärmeenergie an die Wärmespeicherschichten ab. Dadurch kühlt er selbst entlang seines Weges durch den Wärmespeicher ab. Die Wärmespeicherschichten, in deren Bereich der Luftstrom in den Wärmespeicher einströmt, werden somit stärker erwärmt als die nachfolgenden Wärmespeicherschichten auf der Ausgangsseite des Luftführungskanals bzw. der Luftführungskanäle. Dies führt zur Ausbildung eines Temperaturgradienten innerhalb des Wärmespeichers. Die Wärmedämmschichten unterbinden oder verlangsamen einen Temperaturausgleich zwischen den Wärmespeicherschichten. Die axiale Wärmeleitung innerhalb des Wärmespeichers ist demnach durch die Wärmedämmschichten reduziert, wodurch die axialen Temperaturprofile erhalten bleiben. Die Wärmespeicherschichten, welche eine hohe Temperatur aufweisen, sind zu dem angrenzenden Bereich mit der höheren Temperatur hin ausgerichtet, beispielsweise zu dem Innenraum des Gebäudes. Entsprechend sind die Wärmespeicherschichten, welche eine vergleichsweise niedrige Temperatur aufweisen, zu dem Bereich mit der niedrigeren Temperatur hin ausgerichtet, während der kalten Jahreszeiten beispielsweise zu dem Außenbereich des Gebäudes. Die Temperaturdifferenz zwischen den beiden Enden des Wärmespeichers und den angrenzenden Bereichen ist somit jeweils vergleichsweise gering gehalten, was zu geringen Wärmeverlusten führt. Der Wärmespeicher bildet durch den geschichteten Aufbau mit den Wärmedämmschichten sowohl während des Betriebs der Lüftungsvorrichtung als auch während deren Ruhezeiten keine Wärmebrücke zwischen dem Innenraum und dem Außenbereich des Gebäudes aus, wodurch die Energieverluste von dem Innenraum zu dem Außenbereich gering gehalten werden.

Eine hohe Wärmespeicherkapazität des Wärmespeichers kann dadurch gewährleistet werden, dass die Wärmespeicherschichten aus einem Material mit einer Wärmekapazität in einem Bereich von 400 J/kg/K bis 4200 J/kg/K gebildet sind. Aufgrund der besonderen Enge der Einbausituation ist hierbei zusätzlich das Verhältnis J/m³K dominierend, welches zusätzlich zur oben definierten Speicherfähigkeit die Dichte des Speichermaterials berücksichtigt. Werte liegen hier in einem Bereich von 1500 bis 4500 KJ/m³/K.

Eine gute thermische Isolation zwischen den Wärmespeicherschichten kann dadurch erreicht werden, dass die Wärmedämmschicht oder die Wärmedämmschichten aus einem Material mit einer Wärmeleitzahl kleiner als 0,5 W/m/K, bevorzugt kleiner als 0,3 W/m/K, gebildet sind.

Um einen durgängigen Luftführungskanal oder mehrere durchgängige Luftführungskanäle zu erhalten kann es vorgesehen sein, dass die Wärmespeicherschichten jeweils von einer oder mehreren Kanaldurchlässen durchdrungen sind, dass die Wärmedämmschicht oder die Wärmedämmschichten von jeweils einer oder mehreren Kanaldurchbrüchen durchbrochen sind, und dass Kanaldurchlässe und Kanaldurchbrüche der aufeinanderfolgenden Wärmespeicherschichten und Wärmedämmschichten derart zueinander ausgerichtet sind, dass sie den zumindest einen Luftführungskanal ausbilden. Die Luft wird somit von einem Kanaldurchlass einer Wärmespeicherschicht zu einem Kanaldurchbruch der nachfolgenden Wärmedämmschicht und von dieser zu einem Kanaldurchlass der nächsten Wärmespeicherschicht und so fort geleitet. Es bilden sich so ein oder mehrere durchgängige Luftführungskanäle, durch welche die Luft durch den Wärmespeicher geleitet werden kann. Die Kanaldurchlässe und Kanaldurchbrüche können vorteilhaft bereits vor dem Zusammenführen der Komponenten in die Wärmespeicherschichten und Wärmedämmschichten eingebracht werden. Dies ermöglicht eine einfache und kostengünstige Herstellung des Wärmespeichers. Es ergibt sich ein modularer Aufbau des Wärmespeichers, dessen Speichervermögen durch geeignete Auswahl der Anzahl vorgesehener Wärmespeicherschichten an die jeweiligen Anforderungen angepasst werden kann. Dabei bilden sich der oder die Luftführungskanäle beim Aneinanderreihen der Wärmespeicherschichten und Wärmedämmschichten aus.

Ein seitliches Ausströmen der geförderten Luft aus dem oder den Luftführungskanälen kann dadurch vermieden werden, dass die Wärmespeicherschichten und die jeweils benachbarten Wärmedämmschichten des Wärmespeichers jeweils an Kontaktflächen flächig aneinander anliegen oder an Kontaktflächen stoffschlüssig oder kraftschlüssig dichtend miteinander verbunden sind. Durch die flächige Anlage oder besonders die stoffschlüssige Verbindung der Kontaktflächen können zwischen den Wärmespeicherschichten und den Wärmedämmschichten ausgebildete Spalte, durch welche Luft von dem oder den Luftführungskanälen an den seitlichen Rand des Wärmespeichers gelangen kann, vermieden werden. Alternativ können die luftführenden Kanäle innenseitig vollumfänglich beschichtet werden, beispielsweise im Tauchbad.

Ein flächiger Kontakt zwischen den Wärmespeicherschichten und den angrenzenden Wärmedämmschichten kann dadurch erreicht werden, dass zumindest ein Teil der Wärmespeicherschichten und der Wärmedämmschichten des Wärmespeichers eben ausgebildet sind oder dass zumindest ein Teil der Wärmespeicherschichten und/oder der Wärmedämmschichten des Wärmespeichers um jeweils eine Achse gebogen ausgebildet sind oder dass zumindest ein Teil der Wärmespeicherschichten und/oder der Wärmedämmschichten des Wärmespeichers gewölbt ausgebildet sind. Ebene Wärmespeicherschichten und Wärmedämmschichten können kostengünstig hergestellt werden. Die gebogene oder gewölbte Ausbildung der Wärmespeicherschichten und der Wärmedämmschichten führt beim Verbinden der Schichten zu einer Selbstzentrierung, sodass diese korrekt zueinander ausgerichtet sind. Durch die ebene, gebogene oder gewölbte Ausbildung der Wärmespeicherschichten und der Wärmedämmschichten kann die äußere Geometrie des Wärmespeichers an die vorliegenden Einbaubedingungen in der raumlufttechnischen Lüftungsvorrichtung angepasst werden. So können insbesondere die axial ausgerichteten Stirnseiten des Wärmespeichers an die Form vorgeschalteter oder nachgeordneter Bauteile der raumlufttechnischen Lüftungsvorrichtung angepasst werden. Durch die Formgebung der Schichten kann der zwischen den Stirnseiten und den angrenzenden Bauteilen ausgebildete Spalt klein gehalten werden.

Vorteilhaft kann es vorgesehen sein, dass der zumindest eine Luftführungskanal geradlinig durch den Wärmespeicher geführt ist oder dass der zumindest eine Luftführungskanal auf einer gebogenen, vorzugsweise auf einer spiralförmigen, und/oder gestuften Bahn durch den Wärmespeicher geführt ist. Ein geradliniger Verlauf des oder der Luftführungskanäle führt zu geringen Strömungswiderständen innerhalb des Wärmespeichers. Durch einen gebogenen Verlauf wird die Wegstrecke, welche die Luft innerhalb des Wärmespeichers durchläuft, verlängert. Dies führt zu einem verbesserten Wärmeübertrag sowohl von der Luft an die Wärmespeicherschichten wie auch umgekehrt. Kleine Stufen innerhalb des Luftführungskanals/der Luftführungskanäle gestatten das stetige Aufbrechen der Strömung, wodurch eine ausgebildete Strömung verhindert wird. Durch eine gebogene oder gestufte Führung des Luftführungskanals/ der Luftführungskanäle wird eine lichte Kanalführung vermieden. Dies zwingt Schallwellen zu Reflexionen, welche helfen, die Schalldämmung zu verbessern.

Der Aufbau des Wärmespeichers aus Wärmespeicherschichten und Wärmedämmschichten mit jeweils darin eingebrachten Kanaldurchlässen und Kanaldurchbrüchen erlaubt für den Wärmespeicher nahezu alle Freiheitsgrade der dreidimensionalen Geometriegestaltung. Vielfältige Formen der Führung des Luftführungskanals/der Luftführungskanäle innerhalb des Wärmespeichers können dadurch realisiert werden, dass die an den gegenüberliegenden Oberflächen einer jeweiligen Wärmespeicherschicht angeordneten Öffnungen eines Kanaldurchlasses, bezogen auf die Mittellängsachse des Wärmespeichers, fluchtend zueinander angeordnet sind oder dass die an den gegenüberliegenden Oberflächen einer jeweiligen Wärmespeicherschicht angeordneten Öffnungen eines Kanaldurchlasses, bezogen auf die Mittellängsachse des Wärmespeichers, seitlich versetzt zueinander angeordnet sind. Sind die gegenüberliegend angeordneten Öffnungen der jeweiligen Kanaldurchlässe fluchtend zueinander angeordnet, so können durch Aneinanderreihung gleichartiger und gleich ausgerichteter Wärmespeicherschichten geradlinig verlaufende Luftführungskanäle erhalten werden. Werden die Wärmespeicherschichten zueinander seitlich versetzt oder verdreht angeordnet, so können stufige Luftführungskanäle erzeugt werden. Durch Aneinanderreihen von Wärmespeicherschichten mit seitlich versetzt angeordneten Öffnungen der jeweiligen Kanaldurchlässe lassen sich gebogene oder schräg verlaufende Luftführungskanäle erzeugen.

Der Verlauf der Luftführungskanäle kann weiterhin dadurch beeinflusst werden, dass der Kanaldurchlass oder die Kanaldurchlässe einer Wärmespeicherschicht geradlinig oder gebogen oder gestuft verlaufend ausgebildet sind. Geradlinig verlaufende Kanaldurchlässe können besonders kostengünstig hergestellt werden. Sie ermöglichen die Ausbildung lichter oder polygonal verlaufender Luftführungskanäle. Durch Aneinanderreihung gebogener Kanaldurchlässe können gebogene Luftführungskanäle bereitgestellt werden, während mittels gestuft ausgebildeter Kanaldurchlässe entsprechend gestuft verlaufende Luftführungskanäle erhalten werden.

Die Gestaltungsmöglichkeiten für den Luftführungskanal bzw. die Luftführungskanäle können dadurch erweitert werden, dass der Kanaldurchlass oder die Kanaldurchlässe einer Wärmespeicherschicht zwischen ihren Öffnungen jeweils einen konstanten Querschnitt aufweisen oder dass der Kanaldurchlass oder die Kanaldurchlässe einer Wärmespeicherschicht zwischen ihren Öffnungen jeweils einen sich verändernden Querschnitt aufweisen und/oder dass Kanaldurchlässe einer Wärmespeicherschicht unterschiedliche Querschnitte aufweisen und/oder dass einen Luftführungskanal bildende Kanaldurchlässe aufeinanderfolgender Wärmespeicherschichten eines Wärmespeichers zumindest teilweise unterschiedliche Querschnitte aufweisen. Kanaldurchlässe mit konstanten Querschnitten können kostengünstig hergestellt werden. Sie ermöglichen die Luftführung mit gleichbleibendem Strömungswiderstand und Strömungsgeschwindigkeit. Durch sich innerhalb eines Kanaldurchlasses verändernde Querschnitte können Laminarströmungen vermieden und damit ein verbesserter Wärmeübertrag zwischen der Wärmespeicherschicht und der Luft erreicht werden. Durch unterschiedliche Querschnitte der in eine Wärmespeicherschicht eingebrachten Kanaldurchlässe kann der Volumenstrom der durch den Wärmespeicher geleiteten Luft in verschiedenen Bereichen des Wärmespeichers unterschiedlich ausgebildet werden. Dadurch kann der Energieeintrag in den verschiedenen Bereichen des Wärmespeichers beeinflusst werden. Weisen zu einem Luftführungskanal aneinandergereihte Kanaldurchlässe zumindest teilweise unterschiedliche Querschnitte auf, so kann der Querschnitt des Luftführungskanals entlang seines Verlaufs durch den Wärmespeicher verändert werden. Dadurch kann beispielsweise die Strömungsgeschwindigkeit der Luft entlang ihres Weges durch den Luftführungskanal sowie die dem jeweiligen Kanaldurchlass zugewandte Oberfläche der Wärmespeicherschicht verändert und damit der Wärmeübergang zwischen Luft und Wärmespeicherschicht beeinflusst werden. Besonders hervorzuheben ist die Optimierung zwischen wärmeübertragender Fläche und der umgebenden Speichermaterialtiefe. Die Gestaltungsspielräume ermöglichen den Abgleich der Temperaturgradienten zweier oder mehrerer luftkanalumgebender Speicherschichten hin zum gleichem Betrag in der symmetrischen Mitte. In diesem Fall wird das Material bestmöglich homogen be- und entladen.

Entsprechend einer bevorzugten Ausgestaltung kann es vorgesehen sein, dass benachbarte Wärmespeicherschichten zumindest in einem Teilbereich des Wärmespeichers bezüglich der Ausrichtung und Anordnung der Kanaldurchlässe gleich ausgebildet sind und dass die Wärmespeicherschichten gleich zueinander ausgerichtet sind. Es können so durch entsprechende Ausbildung der Kanaldurchlässe lineare, gebogene oder gestufte Luftführungskanäle ausgebildet werden. Durch die einheitliche Ausbildung und Ausrichtung der Wärmespeicherschichten ergeben sich ein einfacher Aufbau und damit eine einfache Herstellung des Wärmespeichers.

Ist es vorgesehen, dass benachbarte Wärmespeicherschichten zumindest in einem Teilbereich des Wärmespeichers bezüglich der Ausrichtung und Anordnung der Kanaldurchlässe gleich ausgebildet sind und dass die Wärmespeicherschichten in Umfangsrichtung um die Mittellängsachse des Wärmespeichers zueinander gedreht ausgerichtet sind, so können gebogene, beispielsweis spiralförmige Luftführungskanäle ausgebildet werden. Durch einen entsprechenden Versatz der gegenüberliegend angeordneten Öffnungen von Kanaldurchlässen benachbarter Wärmespeicherschichten, wie er durch entsprechend gedreht zueinander ausgerichtete Wärmespeicherschichten erhalten werden kann, kann ein gestufter Verlauf des Luftführungskanals erreicht werden. Dabei sind die Stufen im Übergang zwischen den benachbarten Wärmespeicherschichten ausgebildet. Sind die gegenüberliegenden Öffnungen eines Kanaldurchlasses nicht fluchtend zueinander ausgerichtet (schräg oder gebogen ausgebildeter Kanaldurchlass), so können die gegenüberliegenden Öffnungen der Kanaldurchlässe zweier benachbarter Wärmespeicherschichten durch entsprechende Ausrichtung in Umfangsrichtung in Deckung zueinander gebracht werden, sodass sich ein nicht gestufter Luftführungskanal ausbildet.

Eine exakte Ausrichtung der Wärmespeicherschichten zueinander bzw. zu den dazwischen angeordneten Wärmedämmschichten dann dadurch erreicht werden, dass an den Wärmespeicherschichten und/oder der Wärmedämmschicht / den Wärmedämmschichten des Wärmespeichers jeweils zumindest eine Positioniermarke zur gegenseitigen Ausrichtung der Wärmespeicherschichten und/oder der Wärmedämmschicht / der Wärmedämmschichten zueinander angeordnet ist, bevorzugt dass die Positioniermarke als Ausnehmung oder als Einkerbung ausgebildet ist. Anhand der Positioniermarken können aufeinanderfolgende Wärmespeicherschichten exakt zueinander ausgerichtet werden, sodass sich durchgängige Luftführungskanäle bilden. Bei separat ausgebildeten Wärmespeicherschichten können auch diese anhand der jeweiligen Positioniermarke gegenüber den benachbarten Wärmespeicherschichten ausgerichtet werden. Die Positioniermarke kann an benachbarten Wärmespeicherschichten an verschiedenen Positionen angeordnet sein, sodass bei einer Anordnung der Wärmespeicherschichten mit zueinander ausgerichteten Positioniermarken ein Versatz, beispielsweise in Umfangsrichtung, der benachbarten Wärmespeicherschichten erreicht wird. Auch kann es vorgesehen sein, dass mehrere Positioniermarken, beispielsweise über den äußeren Umfang der jeweiligen Wärmespeicherschicht verteilt, vorgesehen sind. Durch entsprechende Zuordnung der Positioniermarken benachbarter Wärmespeicherschichten während der Herstellung des Wärmespeichers können die Wärmespeicherschichten gleich oder versetzt zueinander ausgerichtet werden. Entsprechendes gilt für separat ausgebildeten Wärmedämmschichten, über deren äußeren Umfang verteilt ebenfalls Positioniermarken angeordnet sein können. Sind die Positioniermarken als Ausnehmung oder als Einkerbung ausgebildet, so kann eine exakte Ausrichtung der Wärmespeicherschichten und gegebenenfalls der separat ausgebildeten Wärmedämmschichten durch ein entsprechendes Führungselement, welches in die Ausnehmung oder Einkerbung eingelegt oder eingeschoben wird, erreicht werden. Reproduzierbare und individualisierbare Wärmerückgewinnungseigenschaften sind durch das sich ergebende Positionierprofil leicht wiederholt herstellbar.-

Vorzugsweise kann es vorgesehen sein, dass die gegenüberliegend angeordneten Stirnflächen des Wärmespeichers eben ausgebildet sind oder dass zumindest eine der gegenüberliegend angeordneten Stirnflächen des Wärmespeichers gewölbt ausgebildet ist. Durch die ebene oder gewölbte Ausbildung der jeweiligen Stirnfläche kann diese in ihrer Form an entlang der Luftströmung vorgeschaltete oder nachgeordnete Bauelemente der Lüftungsvorrichtung angepasst werden. Dabei kann die gewölbte Formgebung, wie bereits beschrieben, durch entsprechend gewölbt geformte Wärmespeicherschichten und Wärmedämmschichten erzielt werden. Auch ist es möglich, die Form der Stirnflächen des Wärmespeichers durch Wärmespeicherschichten und Wärmedämmschichten vorzugeben, deren äußere Abmessungen sich zum jeweiligen axialen Ende des Wärmespeichers hin verändern. So kann beispielsweise der äußere Durchmesser der Wärmespeicherschichten und Wärmedämmschichten zum Ende des Wärmespeichers hin verringert werden, umso beispielsweise eine sich konisch verjüngende oder halbkugelförmige Stirnfläche auszubilden. Auch ist es denkbar, eine axiale Ausnehmung in den äußeren Wärmespeicherschichten und Wärmedämmschichten vorzusehen, deren Durchmesser sich zum Ende des Wärmespeichers hin vergrößert. Auf diese Weise kann beispielsweise eine kegelförmige oder halbkugelförmige Ausnehmung in der Stirnfläche des Wärmespeichers ausgebildet werden.

Das axiale Temperaturprofil des Wärmespeichers kann dadurch angepasst und optimiert werden, dass die Wärmespeicherschichten des Wärmespeichers gleiche Materialstärken aufweisen oder dass die Wärmespeicherschichten des Wärmespeichers unterschiedliche Materialstärken aufweisen, bevorzugt dass sich die Materialstärken der entlang des zumindest einen Luftführungskanals aufeinanderfolgenden Wärmespeicherschichten stetig verändern, besonders bevorzugt dass sich die Materialstärken der entlang des zumindest einen Luftführungskanals aufeinanderfolgenden Wärmespeicherschichten in Strömungsrichtung der Wärme abgebenden Luft stetig vergrößern. Wärmespeicherschichten mit gleichen Materialstärken sind in entsprechend großen Stückzahlen kostengünstig herzustellen. Weiterhin vereinfacht sich die Montage des Wärmespeichers, da keine vorgegebene Reihenfolge der verwendeten Wärmespeicherschichten eingehalten werden muss. Durch Verwendung von Wärmespeicherschichten mit unterschiedlichen Materialstärken kann der Wärmeinhalt einer Wärmespeicherschicht für eine jeweilige Temperatur entsprechend der jeweils vorliegenden Anforderungen angepasst werden. Gleichzeitig können Bereich gleicher Temperatur entlang des zumindest einen Luftführungskanals vorgegeben werden. Dies gilt insbesondere dann, wenn für die Wärmespeicherschichten Materialien mit guter Wärmeleitfähigkeit verwendet sind, so dass sich innerhalb einer Wärmespeicherschicht nur geringe Temperaturunterschiede ausbilden. Bei einem bevorzugten Wärmespeicher wird sich in axialer Richtung beim Wärmeeintrag durch zugeführte, warme Luft ein Temperaturprofil einstellen, welches im Bereich der Luftzuführung die höchsten Temperaturen und die größten Temperaturgradienten zwischen den Wärmespeicherschichten aufweist. Zum Auslass der warmen Luft des zumindest einen Luftführungskanals hin werden die Temperaturen und die Temperaturgradienten abnehmen. Durch Verwendung von vergleichsweise dünnen Wärmespeicherschichten am Einlass der warmen Luft und nachfolgenden Wärmespeicherschichten mit ansteigender Materialstärke können diese Temperaturgradienten bei einer vergleichsweise geringen Anzahl an erforderlichen Wärmespeicherschichten und entsprechend Wärmedämmschichten weitestgehend erhalten bleiben.

Beim Abkühlen der Luft innerhalb des Wärmetauschers bildet sich Kondensat, welches bei bekannten Lüftungsvorrichtungen, beispielsweise durch eine leichte Schrägstellung, abgeleitet wird. Durch Ansaugen und Aufwärmen von kalter Luft aus dem Außenbereich wird ein sehr trockenes Raumklima erzeugt. Um den Feuchtigkeitsgehalt der angesaugten Luft zu erhöhen kann es vorgesehen sein, dass entlang des zumindest einen Luftführungskanals zumindest eine Senke zur Aufnahme von Kondensat ausgebildet ist. Das beim Abkühlen warmer Luft anfallende Kondensat sammelt sich in der oder den Senken. Beim anschließenden Ansaugen und Aufwärmen kalter und trockener Luft verdunstet das in der oder den Senken gesammelte Kondensat zumindest teilweise, sodass der Feuchtigkeitsgehalt der angesaugten Luft ansteigt. Es erfolgt somit eine Rückbefeuchtung der Raumluft. Vorteilhaft verjüngt sich durch das gesammelte Kondensat der verbleibende Strömungsquerschnitt des Luftführungskanals im Bereich der Senke oder Senken. Dadurch steigen in diesen Bereichen die Strömungsgeschwindigkeiten und damit die Konvektion und der Stoffübergangskoeffizient. Ein weiterer Vorteil ergibt sich daraus, dass bei kompletter Rückbefeuchtung auf einen Ablauf für das Kondensat, der üblicherweise in den Außenbereich des Gebäudes geführt ist, verzichtet werden kann. Dadurch vereinfacht sich der Aufbau der Lüftungsvorrichtung.

Ist eine Rückbefeuchtung der Raumluft nicht erwünscht kann es vorgesehen sein, dass im Bereich der Senke ein Kondensatablauf zu dem Luftführungskanal geführt ist. Der Kondensatablauf kann beispielsweise als kleine, vom äußeren Rand der Wärmespeicherschicht zu dem Luftführungskanal geführte Bohrung ausgebildet sein. Auch ist es möglich, den Kondensatablauf als Ausnehmung in einer Wärmedämmschicht vorzusehen. Weiterhin kann der Kondensatablauf als durch mehrere Wärmespeicherschichten und Wärmedämmschichten geführte Bohrung gebildet sein. Das in der oder den Senken angesammelte Kondensat kann über den jeweiligen Kondensatablauf ablaufen.

Eine Steuerung der Rückbefeuchtung der Raumluft kann dadurch erfolgen, dass der Wärmespeicher um seine Mittellängsachse drehbar gelagert ist. In einer oder mehreren Senken gesammeltes Kondenswasser kann so bei Bedarf durch Drehen des Wärmespeichers entlang des oder der gebogen oder gestuft verlaufenden Luftführungskanäle nach außen abgeführt werden. Die Menge der Rückbefeuchtung kann durch Einstellung der verbleibenden Kondensatmenge beeinflusst werden. Dazu ist es denkbar, den Wärmespeicher mit definierter Geschwindigkeit zu drehen. Es läuft so ein Teil des Kondensat vor der Verdunstung aus dem Wärmespeicher heraus und in einen vorgesehenen Abfluss. Durch Einsatz einer geeigneten Regelungstechnik zur Steuerung der Drehung des Wärmespeichers kann die Rückbefeuchtungsleistung und damit die Raumluftfeuchte gezielt beeinflusst werden.

Ist eine Rückbefeuchtung der Raumluft vorgesehen und reicht die Verdunstungsleistung im Wärmespeicher zum Verdunsten der gewünschten Kondensatmenge nicht aus kann es vorgesehen sein, dass der Wärmespeicher zumindest eine Verdunstungsschicht mit einer großen Oberfläche aufweist und dass die zumindest eine Verdunstungsschicht vorzugsweise aus einem porösen Material gebildet ist. Die Verdunstungsschicht ist vorzugsweise dem Innenraum des Gebäudes zugewandt. Durch wirkende Kapillarkräfte wird das Kondensat innerhalb der Verdunstungsschicht großflächig verteilt, wodurch die Verdunstungsleistung des Wärmespeichers signifikant erhöht wird. Vorzugsweise steht die zumindest eine Verdunstungsschicht in gutem thermischem Kontakt zu einer benachbarten Wärmespeicherschicht oder die Verdunstungsschicht ist selbst als Wärmespeicherschicht ausgebildet.

Entsprechend einer bevorzugten Ausgestaltungsvariante der Erfindung kann es vorgesehen sein, dass die Wärmespeicherschichten aus einem metallischen Werkstoff gebildet sind, besonders bevorzugt dass die Wärmespeicherschichten aus einer Eisenlegierung gebildet sind, ganz besonders bevorzugt dass die Wärmespeicherschichten aus Stahl der Werkstoffnummer 1.1203 gebildet sind. Metallische Werkstoffe, insbesondere Eisenwerkstoffe, verfügen über eine hohe Masse und eine gute Wärmeleitfähigkeit. Sie sind kostengünstig und leicht zu bearbeiten. So können die Wärmespeicherschichten beispielsweise einfach aus Stahlblechen, vorzugsweise aus Stahlblechen der Werkstoffnummer 1.1203, hergestellt werden.

Besonders bevorzugt kann es vorgesehen sein, dass die Wärmedämmschicht oder die Wärmedämmschichten aus einem Kunststoff, vorzugsweise aus PTFE, gebildet sind und/oder dass die Wärmedämmschicht oder die Wärmedämmschichten aus einem Klebstoff gebildet sind. Kunststoffe weisen eine niedrige Wärmeleitfähigkeit auf. Dadurch wird eine gute thermische Isolation der benachbarten Wärmespeicherschichten erreicht. Sie sind weiterhin elastisch. Dadurch können geringe Formabweichungen der aufeinanderfolgenden Wärmespeicherschichten ausgeglichen werden, sodass jeweils ein spaltfreier Kontakt zwischen der Wärmespeicherschicht und der angrenzenden Wärmedämmschicht vorliegt. Vorzugsweise werden lebensmitteltaugliche Kunststoffe oder Klebstoffe verwendet. PTFE als Wärmedämmschicht ist chemisch besonders stabil und garantiert eine lange Einsatzzeit des Wärmespeichers. Die Wärmedämmschichten können als selbsttragende oder als nicht selbsttragende Bauteile ausgebildet sein. Bei nicht selbsttragenden Wärmedämmschichten wird die erforderliche Stabilität durch die angrenzenden Wärmespeicherschichten gewährleistet. So können die Wärmedämmschichten beispielsweise als Folien ausgebildet sein, die zwischen den Wärmespeicherschichten gehalten sind. Bei Herstellung der Wärmedämmschichten aus einem Klebstoff kann eine stoffschlüssige Verbindung zwischen der Wärmedämmschicht und der angrenzenden Wärmespeicherschicht hergestellt werden, so dass auch hier die Wärmedämmschicht durch die Wärmespeicherschicht gehalten ist.

Ein kompakt aufgebauter Wärmespeicher kann dadurch erhalten werden, dass die Wärmespeicherschichten und die jeweils benachbarte Wärmedämmschicht oder die jeweils benachbarten Wärmedämmschichten miteinander verklebt sind oder dass die Wärmespeicherschichten mittels der Wärmedämmschicht oder der Wärmedämmschichten miteinander verklebt sind. Durch die Klebeverbindungen können Spalte zwischen den Wärmespeicherschichten und den Wärmedämmschichten sicher vermieden werden. Werden die Wärmespeicherschichten mittels der Wärmedämmschichten verklebt, so sind die Wärmedämmschichten als Klebstoff ausgebildet. Dies führt zu einem besonders einfach aufgebauten und damit kostengünstig herstellbaren Wärmespeicher. Bei separat ausgebildeten Wärmedämmschichten, welche durch einen zusätzlichen Klebstoff mit den Wärmespeicherschichten verklebt sind, steht eine große Materialauswahl für die Wärmedämmschichten zur Verfügung, da die Materialien selbst nicht klebend ausgebildet sein müssen. Damit können Materialien verwendet werden, die optimale Eigenschaften zur Ausbildung einer Wärmedämmschicht, beispielsweise eine sehr niedrige Wärmeleitfähigkeit, aufweisen.

Einer besonders bevorzugten Ausführungsform der Erfindung nach kann es vorgesehen sein, dass die Wärmespeicherschichten und die jeweils benachbarte Wärmedämmschicht oder die jeweils benachbarten Wärmedämmschichten durch eine Spannvorrichtung gegeneinander verspannt sind. Die Spannvorrichtung ermöglicht einen variablen und wieder lösbaren Aufbau des Wärmespeichers. Durch die vorzugsweise axial wirkende Spannkraft werden die Wärmespeicherschichten und die Wärmedämmschichten aneinandergepresst, sodass sich zwischen den Schichten keine Spalten ausbilden. Die Vermeidung von Spalten kann bei dieser Ausführungsform der Erfindung weiter dadurch begünstigt werden, dass die Wärmedämmschichten aus einem gegenüber den Wärmespeicherschichten weichen Material gebildet sind. Die Demontage ermöglicht den optimalen Zugang zur Reinigung des Speichers zum Ziel der Hygieneerhaltung.

Bei besonders dünnen Stegen zwischen luftführenden Kanälen kann das Einprägen führender Nasen und Sicken zur Positionierung der Schichten zueinander helfen, die Ausrichtung auch unter Kraftschluss zu gewährleisten.

Die thermische Isolationswirkung der Wärmedämmschichten kann dadurch an die jeweiligen Anforderungen angepasst werden, dass die Wärmedämmschichten des Wärmespeichers gleiche Schichtdicken aufweisen oder dass die Wärmedämmschichten des Wärmespeichers unterschiedliche Schichtdicken aufweisen, bevorzugt dass sich die Schichtdicken der entlang des zumindest einen Luftführungskanals aufeinanderfolgenden Wärmedämmschichten stetig verändern, besonders bevorzugt dass sich die Schichtdicken der entlang des zumindest einen Luftführungskanals aufeinanderfolgenden Wärmedämmschichten in Strömungsrichtung der Wärme abgebenden Luft stetig verkleinern. Gleiche Schichtdicken der vorgesehenen Wärmedämmschichten sind in großen Stückzahlen kostengünstig herstellbar und führen zu einer einfachen Montage des Wärmespeichers, da keine besondere Reihenfolge der Wärmedämmschichten eingehalten werden muss. Durch Wärmedämmschichten mit unterschiedlichen Schichtdicken kann die jeweilige Isolationswirkung an die Bedingungen entlang des Wärmespeichers angepasst werden. So können im Bereich hoher Temperaturgradienten zwischen den Wärmespeicherschichten vergleichsweise dicke Wärmedämmschichten vorgesehen sein, während in Bereichen niedriger Temperaturgradienten vergleichsweise dünne Wärmedämmschichten angeordnet sind. Das Temperaturprofil des Wärmespeichers kann so bei geringem Materialaufwand und kompaktem Aufbau des Wärmespeichers aufrechterhalten werden.

Die thermische Isolation des Wärmespeichers nach außen kann dadurch verbessert werden, dass zumindest eine der gegenüberliegenden äußeren Schichten des Wärmespeichers als Wärmedämmschicht ausgebildet ist.

Um eine Korrosion der Wärmespeicherschichten zu vermeiden kann es vorgesehen sein, dass die Wärmespeicherschichten jeweils vollständig oder zumindest teilweise von einer Schutzbeschichtung bedeckt sind und dass die Schutzbeschichtung vorzugsweise die benachbarte Wärmedämmschicht oder die benachbarten Wärmedämmschichten bildet. Ist die Schutzbeschichtung aus einem wärmedämmenden Material hergestellt, so kann auch der Energieverlust des Wärmespeichers über seine Mantelfläche reduziert werden.

Ein kostengünstiger und dennoch wirksamer Korrosionsschutz kann dadurch bewirkt werden, dass der Wärmespeicher an seiner äußeren Oberfläche durch eine Schutzschicht bedeckt ist und/oder dass die Oberflächen des oder der Luftführungskanäle durch eine Schutzschicht bedeckt sind. Die Schutzschicht schützt die Oberflächen des Wärmespeichers und damit sowohl die Wärmespeicherschichten als auch die Wärmedämmschichten vor einem chemischen Angriff. Sie überdeckt bzw. schließt weiterhin mögliche, unbeabsichtigt zwischen den Wärmedämmschichten und den Wärmespeicherschichten ausgebildete Spalte.

Eine gute Schutzwirkung bei gleichzeitig kostengünstiger Herstellung kann dadurch erreicht werden, dass die Schutzbeschichtung und/oder die Schutzschicht durch einen Klebstoff gebildet ist oder dass die Schutzbeschichtung und/oder die Schutzschicht als Pulverbeschichtung gebildet ist. Die Beschichtung mittels eines Klebstoffes kann beispielsweise in einem Tauchbad erfolgen. Der Klebstoff kann auch zum Verkleben der Wärmespeicherschichten untereinander oder mit separat ausgebildeten Wärmedämmschichten verwendet werden. Wird der Klebstoff zum unmittelbaren verkleben der Wärmespeicherschichten untereinander verwendet, so bildet er die Wärmedämmschichten aus. Durch eine Pulverbeschichtung kann eine sowohl chemisch als auch mechanisch stabile Schutzschicht auf den Wärmespeicherschichten und/oder dem

Wärmespeicher aufgebracht werden.

Um eine Verunreinigung des Wärmespeichers durch Schmutz oder Bakterien zu vermeiden kann es vorgesehen sein, dass die Schutzbeschichtung und/oder die Schutzschicht antimikrobiell wirksam und/oder spülmaschinenfest ausgebildet ist.

Die Erfindung sieht weiterhin eine raumlufttechnische Lüftungsvorrichtung zur Lüftung von Räumen in Gebäuden, zum Einbau in eine Öffnung einer Gebäudewand, mit zumindest einem Ventilator zur Erzeugung eines Luftstroms und mit einem erfindungsgemäßen Wärmespeicher vor, wobei der Luftstrom bevorzugt durch einen oder mehrere Luftführungskanäle des Wärmespeichers geführt ist. Durch den geschichteten Aufbau des Wärmespeichers, bestehend aus Energie speichernden Wärmespeicherschichten und thermisch isolierenden Wärmedämmschichten, wird ein durch die hindurchgeleitete, warme Luft erzeugtes Temperaturprofil innerhalb des Wärmespeichers erhalten. Ein axialer Wärmefluss ist unterbunden oder zumindest reduziert, so dass Energieverluste des Wärmespeichers der raumlufttechnischen Lüftungsvorrichtung reduziert sind. Der Erhalt des axialen Temperaturprofils ermöglicht die Annäherung des Prozesses an den idealen Prozess des Gegenstromwärmeübertragers und damit den Erhalt höchstmöglicher Wärmeübertragungsgrade.

Ist es vorgesehen den Wärmeübertrager als Rekuperator mit zweifacher Strömungsführung zu betreiben, können hierfür auch gegenläufige Strömungsführungen eingesetzt werden, bei welchen bevorzugt Luftführungskanäle für aus dem Gebäudeinneren ausströmende Luft benachbart zu Luftführungskanälen für in das Gebäudeinnere strömende Luft angeordnet sein können.

Generell können gemäß der Erfindung bevorzugte Ausführungsformen sowohl als Rekuperator als auch als Regenerator betrieben werden.

Beim einem Rekuperator berühren sich die beiden in den Luftführungskanälen strömenden Medien, insbesondere die strömende Luft oder ein strömendes Fluid nicht, der Wärmeübergang findet dann über eine bevorzugte Ausführungsform der Erfindung, den Rekuperator, statt.

Bei Regenerator wird die Speicherfläche von verschiedenen Medien über- oder angeströmt, dies bedeutet die in das Gebäudeinnere tretende Luft und die aus dem Gebäudeinneren austretende Luft können die gleichen oder insbesondere die selben Kanäle durchströmen.

Ist es vorgesehen, dass die Strömungsrichtung des Luftstroms durch den Luftführungskanal oder die Luftführungskanäle umkehrbar ist, so kann zunächst warme Luft, beispielsweise aus einem geheizten Innenraum des Gebäudes, durch den Wärmespeicher transportiert werden. Dabei heizen sich die Wärmespeicherschichten des Wärmespeichers auf, wobei die dem Einlass der warmen Luft zugewandten Wärmespeicherschichten eine höhere Temperatur erreichen als die dem gegenüberliegenden Auslass zugewandten Wärmespeicherschichten. Nach dem Umkehren der Strömungsrichtung des Luftstroms wird kalte, beispielsweise aus einem Außenbereich des Gebäudes herangeführte Luft, durch den Wärmespeicher geleitet. Sie nimmt dabei Wärmeenergie von den Wärmespeicherschichten auf. Durch den ausgebildeten Temperaturgradienten entlang der Luftführungskanäle bleibt entlang des Weges der Luftströmung durch den Wärmespeicher ein Temperaturunterschied zwischen der Luft und der jeweiligen Wärmespeicherschicht erhalten, sodass der Luft entlang ihres gesamten Weges durch den Wärmespeicher Energie zugeführt wird.

Entsprechend einer Ausführungsvariante der Erfindung kann es vorgesehen sein, dass der Wärmespeicher zwei oder mehrere Luftführungskanäle aufweist und dass die Strömungsrichtung in einem ersten Anteil der Luftführungskanäle gegenläufig zu der Strömungsrichtung in einem zweiten Anteil der Luftführungskanäle ausgerichtet ist. Der Wärmespeicher wird so im Gegentakt betrieben. Die von dem warmen Luftstrom abgegebene Wärmeenergie wird direkt auf den kalten Luftstrom übertragen. Die Wärmedämmschichten verringern dabei einen axialen Wärmeverlust des Wärmespeichers.

Eine besonders energieeffiziente Ausgestaltung der raumlufttechnischen Lüftungsvorrichtung kann dadurch erreicht werden, dass der Wärmespeicher derart um eine parallel zur Strömungsrichtung ausgerichteten Achse drehbar gelagert ist, so dass der Wärmespeicher alternierend beide oder alle Luftströme durchwandert und entsprechend Wärme aufnimmt oder abgibt.

Hierzu kann der Wärmespeicher in einer bevorzugten Ausführungsform die Luftführung der prioritätsbegründenden Anmeldung DE 10 2017110 336.8 darstellen.

Die Luftführung 24 kann auch schichtenweise aufgebaut sein, welches es insbesondere gestattet, im Wesentlichen dreidimensionale Kanal- und/oder Speichergeometrien, insbesondere Wärmespeichergeometrien aufzubauen. Hierbei kann die Luftführung schichtenweise Treppen im jeweiligen Kanal, insbesondere Luftführungskanal erzeugen, welche die Strömung vom Einlauf abhalten und somit die Konvektion über die Lauflänge erhöht belassen und akustische Reflexionen zur Dämpfung erhöhen.

Eine besonders energieeffiziente Ausgestaltung der raumlufttechnische Lüftungsvorrichtung kann dadurch erreicht werden, dass der Wärmespeicher derart um eine quer zur Strömungsrichtung ausgerichteten Achse und in Abhängigkeit von der vorliegenden Strömungsrichtung drehbar gelagert ist, dass der Wärmespeicher bei wechselnder Strömungsrichtung innerhalb der raumlufttechnischen Lüftungsvorrichtung nur in eine Richtung durchströmt wird. Beim Transport von beispielsweise warmer Luft aus einem Innenraum des Gebäudes wärmen sich zunächst die dem Innenraum zugewandten Wärmespeicherschichten besonders stark auf. Ein axialer Wärmeverlust zum Außenbereich hin wird durch die Wärmedämmschichten verhindert oder zumindest verringert. Zum Ansaugen kalter Luft aus dem Außenbereich wird der Wärmespeicher derart gedreht, dass die zuvor zum Innenraum gerichteten Wärmespeicherschichten nach außen gerichtet sind. Dadurch trifft die angesaugte Kaltluft zunächst auf die wärmsten Wärmespeicherschichten. Dadurch wird ein hoher Energieübertrag von den Wärmespeicherschichten auf den Luftstrom erreicht.

Um Strömungsverluste zu vermeiden und den Strömungswiderstand der raumlufttechnischen Lüftungsvorrichtung gering zu halten kann es vorgesehen sein, dass zwischen dem Ventilator und dem Wärmespeicher ein Luftführungsteil mit Kanälen angeordnet ist und dass den Luftführungskanälen des Wärmespeichers der Luftstrom durch die Kanäle des Luftführungsteils zugeführt ist.

Das Wärmespeichervermögen der raumlufttechnischen Lüftungsvorrichtung kann dadurch erhöht werden, dass das Luftführungsteil zwei oder mehrere aufeinanderfolgende Wärmespeicherschichten aufweist, welche vorzugsweise gegeneinander durch jeweils zumindest eine Wärmedämmschicht thermisch isoliert sind, und dass die Kanäle durch zumindest einen Teil der Wärmespeicherschichten und die dazwischen angeordnete Wärmedämmschicht oder Wärmedämmschichten geführt ist. Das Luftführungsteil ist demnach entsprechend dem Wärmespeicher schichtenförmig ausgebildet. Es kann mit seinen Wärmespeicherschichten Wärmeenergie aus dem durchgeführten Luftstrom aufnehmen bzw. an diesen abgeben. Die Wärmedämmschichten vermeiden oder verringern einen axialen Wärmetransport. Dadurch wird ein axial ausgebildetes Temperaturprofil innerhalb des Lüftungsteils aufrechterhalten und axiale Energieverluste werden zumindest reduziert.

Ein möglichst störungsfreier Übergang der Luftströmung von dem Luftführungsteil zu dem Wärmespeicher kann dadurch erreicht werden, dass die dem Luftführungsteil zugewandte Stirnfläche des Wärmespeichers und die dem Wärmespeicher zugewandte Stirnfläche des Luftführungsteils komplementär zueinander geformt sind, vorzugsweise dass die Stirnfläche des Lüftungsteils konvex, besonders bevorzugt halbkugelförmig, und die zugewandte Stirnfläche des Wärmespeichers konkav gewölbt ist.

Entsprechend einer besonders bevorzugten Ausführungsvariante der Erfindung kann es vorgesehen sein, dass das Luftführungsteil mit dem Ventilator verbunden ist, dass ein Luftfilter mit dem Ventilator verbunden ist, und dass der Ventilator, der Filter und das Luftführungsteil derart um eine quer, vorzugsweise senkrecht, zur Förderrichtung des Ventilators verlaufenden Achse schwenkbar sind, dass trotz in ihrer Strömungsrichtung alternierender Luftströmung der Lüftungsvorrichtung der Filter und vorzugsweise auch der Ventilator nur einseitig durchströmt sind. Durch die einseitige Durchströmung des Luftfilters kommt es nur zu einer einseitigen Belegung des Luftfilters mit Partikeln, Schad- oder Schwebstoffen sowie eventuell sogar biologisch aktivem Material. Diese Verschmutzungen werden bei der Umkehr der Luftströmung nicht von dem Luftfilter abgetragen und beispielsweise in einen Innenraum des Gebäudes verschleppt.

Die Erfindung wird nachfolgend anhand von Ausführungsbeispielen und der beigeschlossenen Figuren näher erläutert. Dabei verweisen in den Figuren gleiche Bezugszeichen auf gleiche oder entsprechende Elemente.

Es zeigen:
- Fig. 1: in einer seitlichen Schnittdarstellung eine in einer Gebäudewand eingesetzte, raumlufttechnische Lüftungsvorrichtung,
- Fig. 2: in einer seitlichen Schnittdarstellung einen Wärmespeicher,
- Fig. 3: in einer seitlichen Schnittdarstellung einen zweiten Wärmespeicher,
- Fig. 4: in einer axialen Ansicht eine Wärmespeicherschicht,
- Fig. 5: in einer axialen Ansicht eine Wärmedämmschicht,
- Fig. 6: in einer axialen Ansicht die in Figur 4 gezeigte Wärmespeicherschicht mit einer versetzten Positioniermarke,
- Fig. 7: in einer perspektivischen Seitenansicht eine Wärmespeicherschicht mit gebogen verlaufenden Kanaldurchlässen,
- Fig. 8: in einer perspektivischen Seitenansicht eine Wärmespeicherschicht mit geradlinig verlaufenden Kanaldurchlässen,
- Fig. 9: in einer perspektivischen Seitenansicht eine Wärmespeicherschicht mit gestuft verlaufenden Kanaldurchlässen,
- Fig. 10: in einer perspektivischen Seitenansicht eine Abfolge aneinanderliegender Wärmespeicherschichten und Wärmedämmschichten,
- Fig. 11: in einer schematisierten Seitenansicht einen dritten Wärmespeicher,
- Fig. 12: in einer schematisierten Seitenansicht einen Ausschnitt eines Luftführungskanals im Bereich einer Senke eines teilweise dargestellten, vierten Wärmespeichers,
- Fig. 13: in einer schematisierten Seitenansicht den in Figur 12 teilweise gezeigten, vierten Wärmespeicher,
- Fig. 14: in einer seitlichen Schnittdarstellung einen Ausschnitt einer in einer Gebäudewand eingesetzten Lüftungsvorrichtung und
- Fig. 15: in schematisierten Seitenansicht einen sechsten Wärmespeicher.

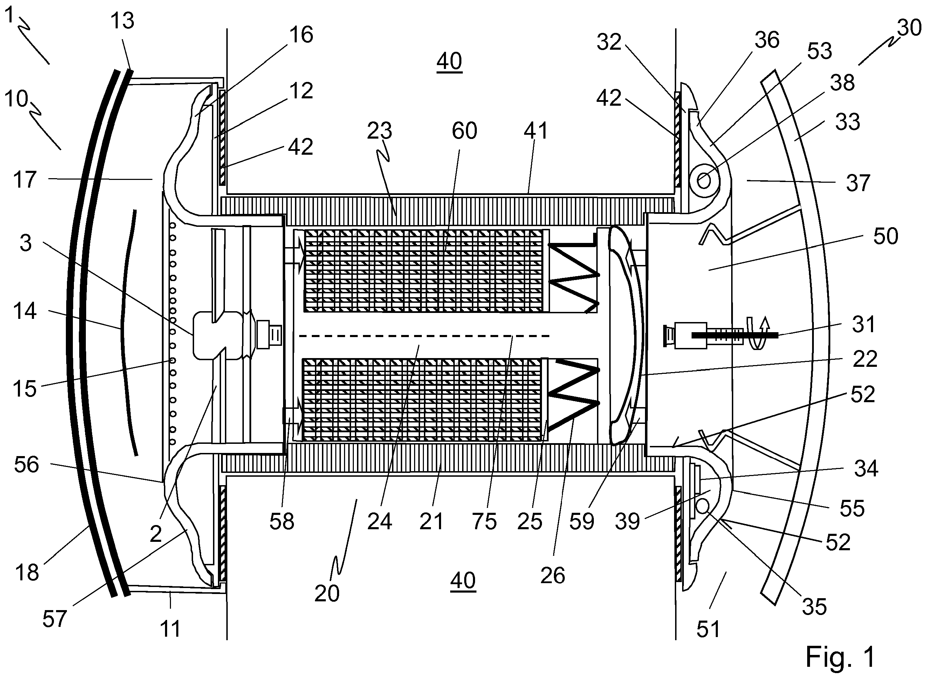

Fig. 1 zeigt in einer seitlichen Schnittdarstellung eine in einer Gebäudewand 40 eingesetzte, raumlufttechnische Lüftungsvorrichtung 1. Sie ist in einen Außenabschnitt 10, einen Mittenabschnitt 20 und einen Innenabschnitt 30 unterteilt. Der Außenabschnitt 10 ist außen und der Innenabschnitt 30 innen an der Gebäudewand 40 angeordnet. Der Mittenabschnitt 20 stellt eine Verbindung zwischen dem Außenabschnitt 10 und dem Innenabschnitt 30 her. Dazu ist der Mittenabschnitt 20 in einer Öffnung 41 der Gebäudewand 40 angeordnet.

Dem Außenabschnitt 10 ist ein Außengehäuse 11 zugeordnet. Das Außengehäuse 11 trägt eine äußere Blende 13. Zur Gebäudewand 40 hin ist das Außengehäuse 11 von einer äußeren Wandanlagefläche 12 abgeschlossen. Die äußere Wandanlagefläche 12 liegt über ein vibrationsdämpfendes Material 42 an der Außenseite der Gebäudewand 40 an. Eine außenseitige Düse 17 ist mit der äußeren Wandanlagefläche 12 verbunden. Die außenseitige Düse 17 bildet einen Wulst 56 aus. Der Wulst 56 ist umlaufend zu der Öffnung 41 in der Gebäudewand 40 und beabstandet zu der äußeren Wandanlagefläche 12 angeordnet. Zur Öffnung 41 der Gebäudewand 40 hin geht die außenseitige Düse 17, ausgehend von dem äußeren Wulst 56, in einen rohrförmigen Abschnitt über. Der rohrförmige Abschnitt ist teilweise in die Öffnung 41 der Gebäudewand eingeführt. Gegenüberliegend geht die äußere Düse 17, ausgehend von dem äußeren Wulst 56, in einen der äußere Kragen 16 über. Der äußere Kragen 16 bildet einen zur Wand hin geneigten Bereich 57 einer äußeren Strömungsoberfläche aus. Innerhalb des rohrförmigen Abschnitts ist ein Ventilator 2 mit einem Lüftermotor 3 angeordnet und gehalten. Der Ventilator 2 ist vorliegend als Axiallüfter ausgebildet. Es ist jedoch auch denkbar, andere bekannte Lüfterausführungen, beispielsweise einen Walzenlüfter, vorzusehen. Nach außen hin ist der rohrförmige Abschnitt von einem Grobfilter 15 abgedeckt. Der Grobfilter 15 ist vorliegend auf Höhe des äußeren Wulstes 56 mit der außenseitigen Düse 17 verbunden.

Die außenseitige Düse 17 ist vorzugsweise rotationssymmetrisch ausgebildet. Ihr ist beabstandet ein Verschlussdeckel 14 zugeordnet. Der Verschlussdeckel 14 ist in axialer Richtung der Lüftungsvorrichtung 1 linear verstellbar gelagert. Der Verschlussdeckel 14 kann somit an die außenseitige Düse 17 herangeschoben werden und diese verschließen. Ebenso kann der Verschlussdeckel 14 an die äußere Blende 13 geschoben werden und damit einen maximalen Strömungsquerschnitt für die von dem Ventilator 2 geförderte Luft freigeben. Vorzugsweise ist der Verschlussdeckel 14 entsprechend der äußeren Blende 13 geformt, sodass er sich in seiner geöffneten Stellung vollständig an die äußere Blende 13 anlegen kann.

Vorliegend sind an der äußeren Blende 13 eine oder mehrere Solarzellen 18 angeordnet. Die Solarzellen 18 wandeln Sonnenlicht in elektrische Energie zum Betrieb der Lüftungsvorrichtung 1 um.

Der Innenabschnitt 30 der Lüftungsvorrichtung 1 liegt mit einer inneren Wandanlagefläche 32 über ein vibrationsdämpfendes Material 42 von innen an der Gebäudewand 40 an. Die Wandanlagefläche 32 trägt eine innenseitige Düse 37. Die innenseitigen Düse 37 bildet einen inneren Wulst 55 aus. Dieser ist umlaufend zu der Öffnung 41 in der Gebäudewand 40 angeordnet. Zu größeren Radien hin geht die innenseitigen Düse 37 in einen inneren Kragen 36 über. Der innere Kragen 36 bildet, ausgehend von dem inneren Wulst 55, einen zur Wand hin geneigten Bereich 53 einer inneren Strömungsoberfläche 52 der innenseitigen Düse 37 aus. Zur Öffnung 41 der Gebäudewand 40 hin geht die innenseitigen Düse 37 in einen rohrförmigen Bereich über. Der geneigt zur Wand hin verlaufende Bereich 53, der Wulst 55 und der rohrförmige Bereich bilden die innere Strömungsoberfläche 52 der innenseitigen Düse 37. An der innenseitigen Düse 37 ist beabstandet eine innere Blende 33 festgelegt. Zwischen der inneren Blende 33 und der innenseitigen Düse 37 ist ein ringförmiger Spalt 51 ausgebildet. Der ringförmige Spalt 51 stellt eine offene Verbindung zu einer Düsenöffnung 50 der innenseitigen Düse 37 her. Die Düsenöffnung 50 ist innerhalb des inneren Wulstes 55 durch den rohrförmigen Bereich der innenseitigen Düse 37 gebildet.

Zwischen der innenseitigen Düse 37 und der inneren Wandanlagefläche 32 ist ein Hohlraum 39 ausgebildet. In diesem sind eine elektrische/elektronische Komponente 34 und ein oder mehrere Energiespeicher 38 angeordnet. Der elektrischen/elektronischen Komponente 34 ist eine Drahtlos-Kommunikationseinrichtung 35 zugeordnet.

Der Mittenabschnitt 20 ist von einem rohrförmig ausgebildeten Dämm-Material 21 eingefasst. Endseitig ist der Innendurchmesser des Dämm-Materials 21 stufenförmig aufgeweitet. In den dem Außenabschnitt 10 zugewandten, stufenförmig aufgeweiteten Bereich ist der rohrförmige Abschnitt der außenseitigen Düse 17 eingeschoben. Gegenüberliegend ist der rohrförmige Bereich der innenseitigen Düse 37 in den ihr zugewandten, stufenförmig aufgeweiteten Bereich des Dämm-Materials 21 eingelassen.

Im mittleren Bereich des Mittenabschnitts 20 ist eine Einheit 23 mit einem Wärmespeicher 60 angeordnet. Der Einheit 23 ist ein Halter 24 zugeordnet. Der Halter 24 weist einen stabförmigen mittleren Bereich auf, an den endseitige Haltescheiben befestigt sind. Der Wärmespeicher 60 sowie ein Luftfilter 26 sind auf den stabförmigen mittleren Bereich des Halters 24 aufgeschoben und axial durch die endseitigen Haltescheiben gehalten. Dazu weisen sowohl der Wärmespeicher 60 wie auch der Luftfilter 26 jeweils einen entlang einer Mittellängsachse 75 des Wärmespeichers 60 verlaufenden, zentralen Durchbruch auf. Der Wärmespeicher 60 und der Luftfilter 26 sind durch einen ebenfalls auf den stabförmigen mittleren Bereich des Halters 24 aufgeschobenen Trennabschnitt 25 räumlich voneinander getrennt. Dem Innenabschnitt 30 zugewandt ist ein Griff 22 mit der den Wärmespeicher 60 tragenden Einheit 23 verbunden.

Der Außenabschnitt 10 und der Innenabschnitt 30 sind durch eine Verbindungseinrichtung 31 miteinander verbunden. Die Verbindungseinrichtung 31 spannt die außenseitige Düse 17 und die innenseitige Düse 37 gegeneinander vor. Die von der Verbindungseinrichtung 31 eingebrachte Spannkraft wird von dem äußeren und dem inneren Kragen 16, 36 auf die äußere und die innere Wandanlagefläche 12, 32 übertragen, sodass diese über die jeweils vorgesehenen, vibrationsdämpfenden Materialien 42 an die Gebäudewand 40 gedrückt werden. Damit ist die Lüftungsvorrichtung 1 an der Gebäudewand 40 festgelegt. Der Mittenabschnitt 20 der Lüftungsvorrichtung 1 ist durch den Eingriff der außenseitigen und der innenseitigen Düse 17, 37 in das Dämm-Material 21 gehalten. Die Befestigung der Lüftungsvorrichtung 1 kann einfach an verschiedene Wanddicken der Gebäudewand 40 angepasst werden, wobei zumindest die Länge der Verbindungseinrichtung 31 und des Dämm-Materials 21 angepasst werden müssen.

Die Lüftungsvorrichtung 1 kann in zwei gegenläufigen Strömungsrichtungen und betrieben werden. Bei einer ersten Förderrichtung des Ventilators 2 wird Luft entsprechend der durch zwei Pfeile gekennzeichneten Ausströmrichtung 59 von einem Innenraum eines Gebäudes in dessen Außenbereich gefördert. In einer zweiten Betriebsstellung des Ventilators 2 wird die Luft entsprechend einer durch Pfeile gekennzeichneten Einströmrichtung 58 von dem Außenbereich in den Innenraum transportiert. Bei beiden Strömungsrichtungen durchströmt die Luft sowohl den Luftfilter als auch den Wärmespeicher 60.

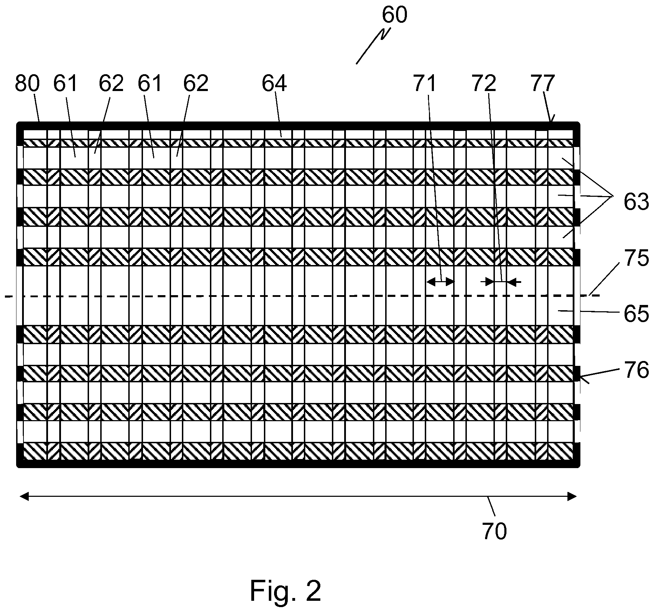

Ausgehend von einem geheizten Innenraum wird zum Entlüften des Innenraums warme Luft entsprechend der Ausströmrichtung 59 durch den Luftfilter 26 und den Wärmespeicher 60 geleitet. Dazu wird die Warmluft von dem Ventilator über den ringförmigen Spalt 51 entlang der inneren Strömungsoberfläche 52 und der Düsenöffnung 50 zu dem Mittenabschnitt 20 der Lüftungsvorrichtung 1 gesaugt. Sie durchströmt dann den Luftfilter 26 und gelangt zu dem Wärmespeicher 60. Der Wärmespeicher 60 ist von einer Vielzahl von Luftführungskanälen 63 durchdrungen, wie dies näher in Figur 2 gezeigt ist. Auf ihrem Weg durch den Wärmespeicher 60 gibt die warme Luft einen Teil ihrer Wärmeenergie an den Wärmespeicher 60 ab. Nach Austritt aus dem Wärmespeicher 60 wird die Luft, geleitet von der außenseitigen Düse 17 und der äußeren Blende 13, durch den Ventilator 2 und den Grobfilter 15 in den Außenbereich des Gebäudes geführt. Dabei kann die geförderte Luftmenge durch entsprechende Positionierung des Verschlussdeckels 14 eingestellt werden.

Durch eine entsprechende Ansteuerung des Ventilators 2 wird für eine anschließende Belüftung des Innenraums dessen Förderrichtung umgekehrt. Kalte Luft aus dem Außenbereich wird jetzt entlang der außenseitigen Düse 17 und der äußeren Blende 13 zu dem Wärmespeicher 60 geleitet. Dabei durchströmt sie den Grobfilter 15, der grobe Verunreinigungen zurückhält. Die kalte Luft durchströmt die Luftführungskanäle 63 des Wärmespeichers 60 in umgekehrter Strömungsrichtung als die zuvor hindurchgeleitete, warme Luft aus dem Innenbereich. Sie nimmt dabei die in dem Wärmespeicher gespeicherte Wärmeenergie zumindest teilweise auf und erwärmt sich. In dem nachfolgenden Luftfilter 26 werden feinere Partikel und Schwebstoffe ausgefiltert, bevor die jetzt aufgewärmte Frischluft entlang der innenseitigen Düse 37 und der inneren Blende 33 in den Innenraum geleitet wird.

Der Wärmespeicher 60 dient somit als Regenersator, der Energie aus einem warmen Luftstroms aufnimmt, zwischenspeichert und anschließend an einen kalten Luftstrom abgibt. Er reduziert dadurch die Energieverluste beim Be- und Entlüften von Gebäuden. In der Ausführung eines Zweistromsgerätes ist der Wärmespeicher bei Gestaltung dünner Trennwände aber auch aufgrund der axialen Wärmeleitwiderstände als sehr vorteilhafter Rekuperator einzusetzen.

Die Ansteuerung des Ventilators 2 bzw. des Lüftermotors 3 des Ventilators 2 erfolgt über die elektrische/elektronische Komponente 34. Die erforderliche elektrische Energie wird von dem oder den Energiespeichern 38, welche von der oder den Solarzellen 18 aufgeladen werden, bereitgestellt. Über die Drahtlos-Kommunikationseinrichtung 35 kann die Lüftungsvorrichtung 1 von einer zentralen, nicht gezeigten Steuereinheit gesteuert werden. So kann beispielsweise ein koordinierter Betrieb mehrerer Lüftungsvorrichtungen 1 erreicht werden. Der oder die Energiespeicher 38, die elektrische/elektronische Komponente 34 sowie die Drahtlos-Kommunikationseinrichtung 35 sind vorteilhaft im Innenabschnitt 30 der Lüftungsvorrichtung 1 und damit in einem Innenraum des Gebäudes angeordnet, sodass sie vor niedrigen Temperaturen und sonstigen Witterungseinflüssen geschützt sind. Der Ventilator 2 ist vorteilhaft dem Außenabschnitt 10 zugeordnet, sodass Geräusche und Vibrationen des Ventilators 2 nicht oder nur gedämpft auf den Innenraum übertragen werden.

Zur Wartung und Reinigung kann die Einheit 23 mit dem Wärmespeicher 60 und dem Luftfilter 26 aus der Lüftungsvorrichtung 1 entnommen werden. Dazu wird die Verbindungseinrichtung 31 gelöst und der Innenabschnitt 30 der Lüftungsvorrichtung 1 abgenommen. Die Einheit 23 kann jetzt mit Hilfe des Griffes 22 aus dem Mittenabschnitt 20 gezogen und gewartet bzw. ersetzt werden.

Figur 2 zeigt in einer seitlichen Schnittdarstellung den Wärmespeicher 60, wie er, angeordnet in seinem technischen Umfeld, bereits in Figur 1 gezeigt ist.

Der Wärmespeicher 60 ist zylinderförmig ausgebildet. Er weist eine zylindrische Mantelfläche 77 auf und ist vorliegend endseitig durch zwei gegenüberliegende, ebene Stirnflächen 76 abgeschlossen. Es sind jedoch auch andere Außenkonturen denkbar, beispielsweise ovale, rechteckig oder konische Formen. Der Wärmespeicher 60 kann so an die jeweilige Form des Mittenabschnitts 20 der Lüftungsvorrichtung 1 angepasst werden.

Der Wärmespeicher 60 weist erfindungsgemäß eine Abfolge aneinanderliegender Wärmespeicherschichten 61 und Wärmedämmschichten 62 auf. Die Wärmespeicherschichten 61 und die Wärmedämmschichten 62 sind vorliegend als ebene Scheiben ausgebildet. Es ist jedoch auch denkbar, die Wärmespeicherschichten 61 und die Wärmedämmschichten um eine Achse gebogen, also kehlförmig, oder gewölbt, beispielsweise in Form eines Kugelabschnitts, auszubilden. Die Wärmespeicherschichten 61 und die Wärmedämmschichten 62 sind in axialer Richtung und damit entlang der Mittellängsachse 75 des Wärmespeichers 60 aneinandergereiht. Benachbarte Wärmespeicherschichten 61 sind jeweils durch eine Wärmedämmschicht 62 zueinander beabstandet. Die Wärmespeicherschichten 61 des Wärmespeichers 60 weisen jeweils eine gleiche Materialstärke 71, wie sie exemplarisch an einer Wärmespeicherschicht 61 durch einen Doppelpfeil gekennzeichnet ist, auf. Es ist jedoch auch denkbar, dass innerhalb eines Wärmespeichers 60 Wärmespeicherschichten 61 mit unterschiedlichen Materialstärken 71 angeordnet sind. Die Wärmedämmschichten 62 weisen vorliegend ebenfalls untereinander eine gleiche Schichtdicke 72 auf. Auch hier ist es denkbar, Wärmedämmschichten 62 mit unterschiedlichen Schichtdicken 72 vorzusehen. Abhängig von der vorgesehenen Anzahl an Wärmespeicherschichten 61 und Wärmedämmschichten 62 und deren Materialstärke 71 bzw. Schichtdicke 72 ergibt sich eine Länge L 70 des Wärmespeichers 60.

Die Luftführungskanäle 63 sind durch den Wärmespeicher 60 geführt. Dabei verlaufen die Luftführungskanäle 63 zwischen den beiden Stirnflächen 76 des Wärmespeichers 60. In dem in Figur 2 gezeigten Ausführungsbeispiel verlaufen die Luftführungskanäle 63 geradlinig. Es ergibt sich so eine lichte Kanalführung. An den Stirnflächen 76 sind die Luftführungskanäle 63 jeweils geöffnet. Auf ihrem Weg durch den Wärmespeicher 60 durchlaufen die Luftführungskanäle 63 jeweils die aufeinanderfolgend angeordneten Wärmespeicherschichten 61 und Wärmedämmschichten 62.

Entlang der Mittellängsachse 75 ist ein Montagekanal 65 in den Wärmespeicher 60 und damit die aufeinanderfolgenden Wärmespeicherschichten 61 und Wärmedämmschichten 62 eingeformt. Der Montagekanal 65 dient der Aufnahme des in Figur 1 gezeigten, stabförmigen mittleren Bereichs des Halters 24.

Am äußeren Umfang der Wärmespeicherschichten 61 und der Wärmedämmschichten 62 sind axial ausgerichtete Positioniermarken 64 angebracht. Die Positioniermarken 64 sind jeweils als nach außen geöffnete Kerben in die Mantelflächen 77 der Wärmespeicherschichten 61 und Wärmedämmschichten 62 eingeformt. Sie bilden bei korrekter Ausrichtung der Wärmespeicherschichten 61 und der Wärmedämmschichten 62 eine durchgängige, axial verlaufende Nut aus.

Der Wärmespeicher 60 ist vorliegend an seiner Außenfläche von einer Schutzschicht 80 bedeckt. Die Schutzschicht 80 bedeckt sowohl die Mantelfläche 77 als auch die Stirnflächen 76 des Wärmespeichers 60. Sie lässt die stirnseitigen Öffnungen der Luftführungskanäle 63 bzw. des Montagekanals 65 offen. Entsprechend einer nicht gezeigten Ausführungsvariante der Erfindung kann es auch vorgesehen sein, dass die inneren Oberflächen der Luftführungskanäle 63 und/oder die innere Oberfläche des Montagekanals 65 von der Schutzschicht 80 bedeckt ausgebildet sind.

Die Wärmespeicherschichten 61 dienen der Zwischenspeicherung von Wärmeenergie. Diese wird einem vergleichsweise warmen, durch die Luftführungskanäle 63 geführten Luftstrom entnommen. Bei einem anschließend durch die Luftführungskanäle 63 geführten kalten Luftstrom wird die in den Wärmespeicherschichten 61 gespeicherte Wärmeenergie zumindest teilweise wieder an den Luftstrom abgegeben. Um möglichst große Energiemengen speichern zu können sind die Wärmespeicherschichten 61 vorteilhaft aus einem Material mit einer möglichst hohen spezifischen Wärmekapazität gebildet. Vorzugsweise liegt die spezifische Wärmekapazität in einem Bereich von 400 J/kg/K bis 4200 J/kg/K. Die Wärme-Speicherfähigkeit der Wärmespeicherschichten 61 kann weiterhin dadurch erhöht werden, dass die Wärmespeicherschichten 61 eine hohe Masse, beispielsweise infolge einer hohen Dichte, aufweisen. Daher sind die volumenspezifischen Speicherfähigkeiten von ausschlaggebender Bedeutung. Werte liegen hier in einem Bereich von 1500 bis 4500 KJ/m³/K.

Um die Wärme schnell von den Luftführungskanälen 63 weg- bzw. zu den Luftführungskanälen 63 hinzuführen und um eine gleichmäßige Wärmeverteilung innerhalb einer jeweiligen Wärmespeicherschicht 61 zu erreichen, sind die Wärmespeicherschichten 61 vorzugsweise aus einem Material mit einer hohen spezifischen Wärmeleitfähigkeit hergestellt. Um den verschiedenen Anforderungen an die Eigenschaften der Wärmespeicherschichten 61 gerecht zu werden, sind diese bevorzugt aus einem Metall hergestellt. Besonders bevorzugt eignen sich Eisenwerkstoffe als Material für die Wärmespeicherschichten 61, da diese bei hohe spezifischer Wärmekapazität, guter Wärmeleitfähigkeit und großer Dichte auch kostengünstig verfügbar sind. In dem gezeigten Ausführungsbeispiel bestehen die Wärmespeicherschichten 61 aus einem Stahl der Werkstoffnummer 1.1203.

Die Wärmedämmschichten 62 verhindern oder reduzieren zumindest eine axiale Wärmeableitung durch den Wärmespeicher 60. Dadurch bleibt ein axiales Temperaturprofil des Wärmespeichers 60 im Wesentlichen erhalten. Die Wärmedämmschichten 62 sind vorzugsweise aus einem Material mit einer niedrigen spezifischen Wärmeleitfähigkeit hergestellt. Bevorzugt sind Materialien mit einer Wärmeleitzahl kleiner als 0,5 W/m/K, besonders bevorzugt kleiner als 0,3 W/m/K, für die Herstellung der Wärmespeicherschichten 62 verwendet. Weiterhin eignen sich im Vergleich zu den Wärmespeicherschichten 61 weiche Werkstoffe als Wärmedämmschichten 62. Diese können geringe Fertigungstoleranzen in der Formgebung der Wärmespeicherschichten 61 ausgleichen, sodass die Wärmespeicherschichten 61 und die Wärmedämmschichten 62 flächig aneinander anliegen. In dem gezeigten Ausführungsbeispiel bestehen die Wärmedämmschichten 62 aus einem Kunststoff, vorzugsweise aus Polytetrafluorethylen (PTFE). Sie sind vorliegend selbsttragend ausgebildet. Um eine Spaltbildung zwischen den Wärmespeicherschichten 61 und den Wärmedämmschichten 62 sicher zu vermeiden, sind die Wärmespeicherschichten 61 und die anliegenden Wärmedämmschichten 62 miteinander verklebt. Dazu ist jeweils zwischen den Wärmespeicherschichten 61 und den Wärmedämmschichten 62 ein Klebstoff vorgesehen. Der aus den Wärmespeicherschichten 61 und Wärmedämmschichten 62 aufgebaute Wärmespeicher 60 bildet so ein kompaktes, selbsttragendes Bauteil.

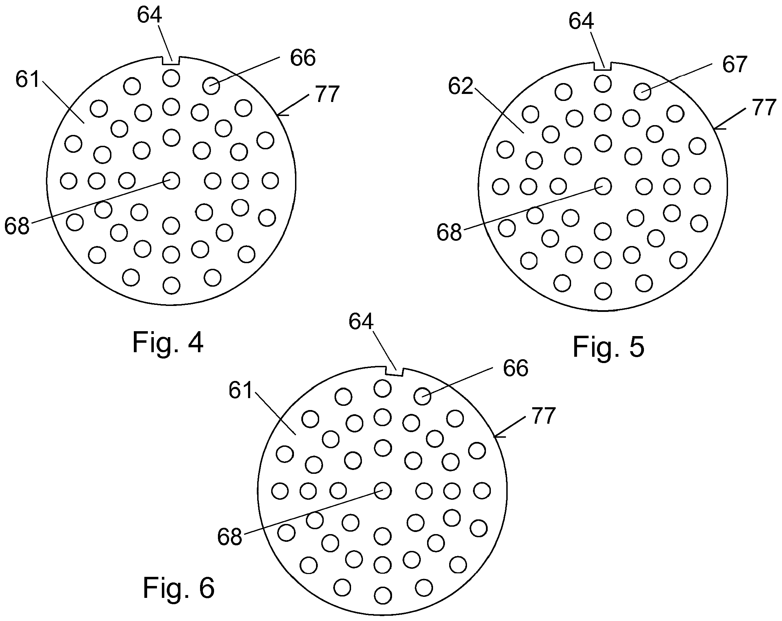

Zur Herstellung des Wärmespeichers 60 werden zunächst die Wärmespeicherschichten 61 und die Wärmedämmschichten 62 hergestellt. Dabei werden in die Wärmespeicherschichten 61 Kanaldurchlässe 66 und in die Wärmedämmschichten Kanaldurchbrüche 67 eingeformt, wie diese insbesondere in den Figuren 4, 5 und 6 gezeigt sind. Ebenso werden die Positioniermarken angebracht, vorliegend eingeformt. Für die Herstellung der Wärmespeicherschichten 61 und der Wärmedämmschichten 62 können spanende Herstellerverfahren vorgesehen werden. Besonders vorteilhaft werden die Wärmespeicherschichten 61 bzw. die Wärmedämmschichten 62 aus einem geeigneten, plattenförmigen oder folienförmigen Material gestanzt. In einem nächsten Fertigungsschritt wird der Klebstoff aufgetragen. Es kann dazu ein Flüssigklebstoff oder ein beidseitig klebendes Klebeband verwendet werden. Ein Flüssigklebstoff wird vorteilhaft in einem Tauchbad appliziert. Es ist jedoch auch denkbar, den Flüssigklebstoff mittels sprühen oder streichen aufzubringen. Der Klebstoff kann auf die Wärmespeicherschichten 61, auf die Wärmedämmschichten 62 oder auf beide Schichten aufgebracht werden. Bevorzugt wird ein Flüssigklebstoff in einem Tauchbad auf die Wärmespeicherschichten 61 und/oder die Wärmedämmschichten aufgebracht. Der Klebstoff bildet so eine durchgängige, schützende Schicht, welche die komplette Oberfläche der jeweiligen Wärmespeicherschicht 61, also auch die Oberflächen der Kanaldurchlässe 66, sowie gegebenenfalls die komplette Oberfläche der jeweiligen Wärmedämmschicht 62 mit den Kanaldurchbrüchen 67 bedeckt. Nach dem Aufbringen des Klebstoffs werden die Wärmespeicherschichten 61 und die Wärmedämmschichten 62 zueinander ausgerichtet und miteinander verklebt. Die korrekte Ausrichtung erfolgt dabei anhand der Positioniermarken 64. Dazu wird vorzugsweise ein nicht gezeigtes Positionierelement, beispielsweise eine Positionierschiene, in die als Ausnehmungen ausgebildeten Positioniermarken 64 eingelegt, so dass sich die in Figur 2 gezeigte, durchgängige Nut ausbildet. Nach dem Ausrichten werden die Wärmespeicherschichten 61 und die Wärmedämmschichten 62 miteinander axial verpresst, bis der Klebstoff ausgehärtet ist oder eine ausreichende Haftwirkung aufbringt.

In einem abschließenden Fertigungsschritt wird die Schutzschicht 80 aufgebracht. Vorliegend ist die Schutzschicht 80 in Form einer Pulverbeschichtung aufgebracht. Diese ist chemisch sehr beständig. Dadurch ist der Wärmespeicher 60 spülmaschinenfest ausgebildet. Die Schutzschicht 80 ist vorliegend weiterhin antimikrobiell ausgeführt. Vorzugsweise sind, wie bereits dargelegt, auch die inneren Oberflächen der Luftführungskanäle 63 mit der Schutzschicht 80 beschichtet. Dazu kann es vorteilhaft sein, die Schutzschicht 80 bereits vor dem Verkleben auf die Wärmespeicherschichten 61 und/oder die Wärmedämmschichten 62 aufzubringen. Durch eine antimikrobielle Ausbildung der Schutzschicht 80 kann eine Keimbildung innerhalb des Wärmespeichers 60 unterdrückt werden. Es können somit vorteilhaft keine Keime von der Lüftungsvorrichtung 1 in die Innenräume des Gebäudes verschleppt werden.

In dem in Figur 2 gezeigten Ausführungsbeispiel ist der Wärmespeicher 60 endseitig durch jeweils eine Wärmespeicherschicht 61 abgeschlossen. Dies führt zu vergleichsweise harten und belastbaren Stirnflächen 76 des Wärmespeichers 60. Es ist jedoch auch denkbar, als jeweils letzte Schicht oder als dem Außenbereich zugewandte letzte Schicht einer Wärmedämmschicht 62 anzuordnen. Dadurch ist auch die äußere Wärmespeicherschicht 61 bzw. sind auch die äußeren Wärmespeicherschichten 61 axial thermisch isoliert, wodurch Energieverluste weiter verringert werden können.

Durch die erfindungsgemäße Ausbildung des Wärmespeichers 60 mit aufeinanderfolgend angeordneten Wärmespeicherschichten 61 und Wärmedämmschichten 62 wird der axiale Wärmetransport gegenüber einem durchgängigen, massiven Wärmespeicherelement deutlich eingeschränkt. Energieverluste, insbesondere an einen nicht geheizten Außenbereich des Gebäudes, können so vermieden oder zumindest deutlich reduziert werden. Während der Förderung von Warmluft, beispielsweise beim Entlüften eines geheizten Innenraums, wird Wärmeenergie von dem Luftstrom auf die Wärmespeicherschichten 61 übertragen, wodurch der Luftstrom abkühlt. Dadurch werden die entgegengesetzt der Strömungsrichtung angeordneten Wärmespeicherschichten 61 stärker aufgeheizt als die nachfolgenden Wärmespeicherschichten 61. Es entsteht so innerhalb des Wärmespeichers ein Temperaturprofil. Dabei werden sich im Bereich der, bezogen auf die Strömungsrichtung der Warmluft, vorderen Wärmespeicherschichten 61 axial größere Temperaturgradienten einstellen als im Bereich der hinteren Wärmespeicherschichten 61. Vorteilhaft sind die vergleichsweise warmen Wärmespeicherschichten 61 dem warmen Bereich, beispielsweise dem warmen Innenraum des Gebäudes, zugewandt, während die vergleichsweise kälteren Wärmespeicherschichten 61 dem kälteren Bereich, beispielsweise dem kalten Außenbereich des Gebäudes, zugewandt sind. Die Temperaturdifferenzen zwischen den Stirnflächen 76 des Wärmespeichers und den angrenzenden Arealen, also dem Innenraum und dem Außenbereich des Gebäudes, sind so entsprechend klein ausgebildet. Dadurch wird ein Wärmetransport zwischen dem Wärmespeicher und dem Innenraum bzw. dem Außenbereich gering gehalten. Der erfindungsgemäße, geschichtete Aufbau des Wärmespeichers 60 führt gegenüber bekannten, massiv ausgebildeten Wärmespeichern zu deutlich reduzierten Energieverlusten bei gleichzeitig signifikant erhöhtem Rekuperationsgrad.

Die Länge L 70 des Wärmespeichers 60 ergibt sich als Vielfaches der Materialstärke 71 der Wärmespeicherschichten 61 und der Schichtdicken 72 der Wärmedämmschichten 62. Durch Anpassen der Anzahl der Wärmespeicherschichten 61 und damit der erforderlichen Anzahl an Wärmedämmschichten 62 kann somit die Länge L 70 des Wärmespeichers 60 an den verfügbaren Raum innerhalb des Mittenabschnitts 20 der Lüftungsvorrichtung 1 angepasst werden. Es können so entsprechend eines Baukastensystems, beispielsweise für unterschiedlich dicke Gebäudewände 40, jeweils geeignete Wärmespeicher 60 bereitgestellt werden. Weiterhin kann durch entsprechende Vorgabe der Anzahl vorgesehener Wärmespeicherschichten 61 die Wärme-Speicherfähigkeit des Wärmespeichers 60 an die jeweiligen Anforderungen angepasst werden. Dies ermöglicht beispielsweise die optimierte oder zumindest verbesserte Ausführung des Speichers entsprechend der vorliegenden Klimabedingungen.

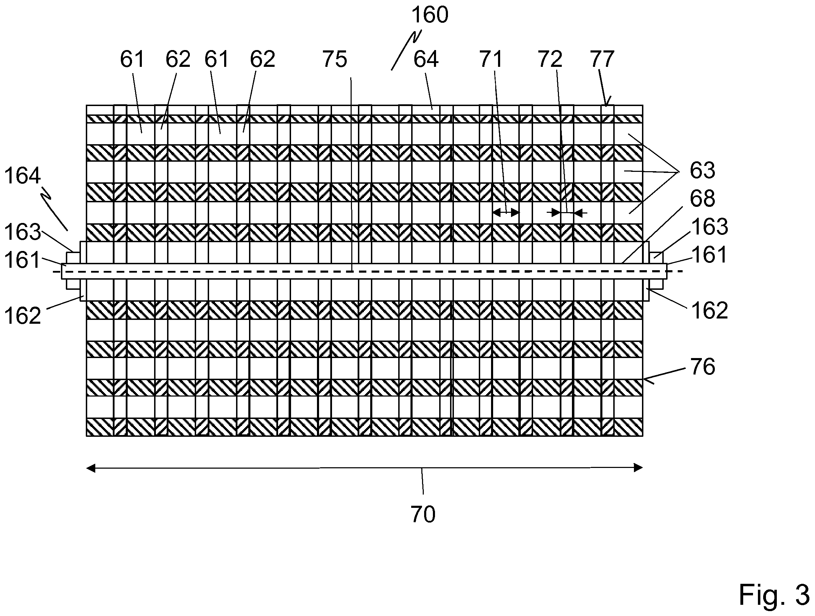

Figur 3 zeigt in einer seitlichen Schnittdarstellung einen zweiten Wärmespeicher 160. Im Gegensatz zu dem in den Figuren 1 und 2 gezeigten ersten Wärmespeicher 60 sind die Wärmespeicherschichten 61 und die Wärmedämmschichten 62 des zweiten Wärmespeichers 160 nicht miteinander verklebt. Weiterhin weist der zweite Wärmespeicher 160 vorliegend keine Schutzschicht 80 auf. Der zweite Wärmespeicher 160 kann jedoch ohne Einschränkung mit einer solchen Schutzschicht 80 mit den zu Figur 1 beschriebenen Eigenschaften und Funktionen ausgestattet werden. Die Funktion und der Aufbau der Wärmedämmschichten 62 und der Wärmespeicherschichten 61 entsprechen der Beschreibung zu dem in Figur 2 gezeigten Wärmespeicher 60, auf die hiermit Bezug genommen wird.

Die Wärmespeicherschichten 61 und die Wärmedämmschichten 62 sind mittels einer Spannvorrichtung 164 axial gehalten und gegeneinander verspannt. Dazu ist vorliegend eine Gewindestange 161 durch eine entlang der Mittellängsachse 75 des zweiten Wärmespeichers 160 geführte Montagebohrung 68 gesteckt. Endseitig sind jeweils eine Unterlegscheibe 162 auf die Gewindestange 161 aufgeschoben und eine Mutter 163 auf die Gewindestange 161 aufgeschraubt. Durch die von den Muttern 163 über die Unterlegscheiben 162 auf die äußeren Wärmespeicherschichten 61 übertragene, axial ausgerichtete Kraft werden die Wärmespeicherschichten 61 und die Wärmedämmschichten 62 gegeneinander gepresst. Dabei bewirken die äußeren Wärmespeicherschichten 61 eine gleichmäßige Druckverteilung über den Querschnitt des zweiten Wärmespeichers 160. Um eine Verformung der äußeren Wärmespeicherschichten 61 aufgrund der einwirkenden Kräfte zu vermeiden oder ausreichend gering zu halten ist es denkbar, äußere Wärmespeicherschichten 61 mit einer gegenüber den inneren Wärmespeicherschichten 61 vergrößerten Materialstärke 71 vorzusehen.

Zur Montage des zweiten Wärmespeichers 160 werden abwechselnd Wärmespeicherschichten 61 und Wärmedämmschichten 62 auf die Gewindestange 161 aufgesteckt und mit Hilfe der Positioniermarken 64 gegenseitig ausgerichtet. Wie bereits zu Figur 2 dargelegt, kann auch hier ein nicht gezeigtes Positionierelement, beispielsweise eine Positionierschiene, in die als Ausnehmungen ausgebildeten Positioniermarken 64 eingelegt werden, so dass sich die in Figur 3 gezeigte, durchgängige Nut ausbildet. Anschließend werden die Unterlegscheiben 162 aufgelegt und die Muttern 163 aufgeschraubt und angezogen. Durch die so eingeleitete Kraft sind die Wärmespeicherschichten 61 und die Wärmedämmschichten 62 sowohl axial als auch in Umfangsrichtung fixiert. Dabei werden die Wärmespeicherschichten 61 und die Wärmedämmschichten 62 so fest aneinandergedrückt, dass zwischen den Schichten keine Spalten vorliegen. Vorzugsweise sind dazu die Wärmedämmschichten 62 im Vergleich zu den Wärmespeicherschichten 61 wieder aus einem weichen Material, vorzugsweise einem Kunststoff, gebildet. Sie gleichen so mögliche Verformungen der Wärmespeicherschichten 61 aus.

Auch bei dem in Figur 3 gezeigten, zweiten Ausführungsbeispiel des erfindungsgemäßen Wärmespeichers 160 kann die Länge L 70 und damit die Wärme-Speicherfähigkeit durch eine geeignete Anzahl an Wärmespeicherschichten 61 und entsprechend Wärmedämmschichten 62 an die jeweiligen Anforderungen angepasst werden. Vorteilhaft ist die Spannvorrichtung 164 lösbar ausgebildet, sodass der zweite Wärmespeicher 160, beispielsweise zur Wartung oder zur Reinigung, wieder demontiert werden kann.

Es ist denkbar, mehrere Spannvorrichtungen 164 pro zweitem Wärmespeicher 160 vorzusehen. Durch mehrere Spannvorrichtung 164 kann ein gleichmäßiger Krafteintrag in den Schichtenstapel erreicht werden. Auch kann anstelle der Schraubverbindung eine alternative Art der axialen Verspannung vorgesehen sein, beispielsweise in Form eines bekannten Schnellverschlusses mit einem Hebel und einem selbsthemmenden Exzenter.

Figur 4 zeigt in einer axialen Ansicht eine Wärmespeicherschicht 61, wie sie für den in Figur 3 gezeigten zweiten Wärmespeicher 160 verwendet ist. Sie weist die Form einer kreisförmigen Scheibe auf. Die Wärmespeicherschicht 61 ist von einer Vielzahl von Kanaldurchlässen 66 durchbrochen. Die Kanaldurchlässe 66 verlaufen vorliegend in axialer Richtung. Die Wärmespeicherschicht 61 weist die zentrisch angeordnete Montagebohrung 68 auf. An ihrem äußeren Umfang ist eine Positioniermarke 64 angebracht. Die Positioniermarke 64 ist vorliegend als axial ausgerichtete Kerbe ausgebildet.

Figur 5 zeigt in einer axialen Ansicht eine Wärmedämmschicht 62, wie sie für den in Figur 3 gezeigten zweiten Wärmespeicher 160 verwendet ist. Die Wärmedämmschicht 62 ist als kreisförmige Scheibe ausgebildet. Dabei weist sie einen gleichen Außendurchmesser wie die in Figur 4 gezeigte Wärmespeicherschicht 61 auf. Die Wärmespeicherschicht 62 ist von den Kanaldurchbrüchen 67 durchdrungen. Die Kanaldurchbrüche 67 sind vorliegend geradlinig ausgebildet. Sie sind in der gleichen räumlichen Anordnung in die Wärmedämmschicht 62 eingebracht wie die in Figur 4 gezeigten Kanaldurchlässe 66 in die Wärmespeicherschicht 61. Auch an der Wärmedämmschicht 62 ist an ihrem äußeren Umfang eine Positioniermarke 64 angebracht. Die Positioniermarke 64 ist als axial ausgerichtete Kerbe ausgebildet. Zentrisch ist die Wärmedämmschicht 62 von der Montagebohrung 68 durchbrochen. Die Darstellung in den Figuren 4 und 5 sind beispielhaft und nicht maßstabsgerecht. Insbesondere können die Anzahl und die Abmessungen der Kanaldurchlässe 66 und der Kanaldurchbrüche 67 deutlich von der Darstellung abweichen.

Der in Figur 3 gezeigte, zweite Wärmespeicher 160 wird durch abwechselndes Aneinanderreihen von in Figur 4 gezeigten Wärmespeicherschichten 61 und von in Figur 5 gezeigten Wärmedämmschichten 62 gebildet. Dabei ermöglichen die axialen Montagebohrungen 68 der Wärmespeicherschichten 61 und der Wärmedämmschichten 62 eine radiale Ausrichtung der Wärmespeicherschichten 61 und der Wärmedämmschichten 62 zueinander. Durch die Positioniermarken 64 können die Wärmespeicherschichten 61 und die Wärmedämmschichten 62 in Umfangsrichtung zueinander ausgerichtet werden. Durch abwechselndes Aneinanderreihen von Wärmespeicherschichten 61 gemäß Figur 4 und Wärmedämmschichten 62 gemäß Figur 5 und gegenseitiges Ausrichten der Wärmespeicherschichten 61 und der Wärmedämmschichten 62 mit Hilfe der Montagebohrungen 68 und der Positioniermarken 64 wird ein zylinderförmiger Stapel mit durchgängigen Luftführungskanälen 63 erhalten. Da die Kanaldurchlässe 66 und die Kanaldurchbrüche 67 der zu dem zweiten Wärmespeicher 160 zusammengefügten Wärmespeicherschichten 61 und Wärmedämmschichten 62, bezogen auf die jeweiligen Montagebohrungen 68 und die Positioniermarken 64, gleich ausgerichtet sind und da die Kanaldurchlässe 66 und die Kanaldurchbrüche 67 linear und axial verlaufend ausgebildet sind, ergeben sich die in Figur 3 gezeigten, achsparallelen Luftführungskanäle 63.

Figur 6 zeigt in einer axialen Ansicht die in Figur 4 gezeigte Wärmespeicherschicht 61 mit einer versetzten Positioniermarke 64. Dabei ist die Positioniermarke 64 im Vergleich zu der Darstellung in Figur 4 entlang der Mantelfläche 77 der Wärmespeicherschichten 61 in Umfangsrichtung versetzt. Entsprechend können auch nicht dargestellt Wärmedämmschichten 62, wie sie in Figur 5 gezeigt sind, mit versetzten Positioniermarken 64 vorgesehen sein. Durch Aneinanderreihen von Wärmespeicherschichten 61 und zugeordneten Wärmedämmschichten 62 mit zueinander versetzt angeordneten Positioniermarken 64 werden gestuft verlaufende Luftführungskanäle 63 erhalten. Dazu werden die Wärmespeicherschichten 61 und die Wärmedämmschichten nach ihren Montagebohrungen 68 und Positioniermarken 64 zueinander ausgerichtet aneinandergereiht. Durch den Versatz der Wärmespeicherschichten 61 in Umfangsrichtung sind auch die durch die jeweiligen Wärmedämmschichten 62 beabstandet gegenüberliegenden Öffnungen der Kanaldurchlässe 66 der benachbarten Wärmedämmschichten 61 in Umfangsrichtung zueinander versetzt. Dadurch entstehen im Übergangsbereich zwischen den Wärmespeicherschichten 61 Stufen in der Kanalführung der Luftführungskanäle 63. Vorzugsweise sind immer eine Wärmespeicherschicht 61 und eine daran anliegende Wärmedämmschicht 62 gleich ausgerichtet, so dass der Versatz und damit die Stufen der Luftführungskanäle 63 jeweils zwischen einem Paar aus einer Wärmespeicherschicht 61 und einer Wärmedämmschicht 62 und einem benachbarten Paar einer Wärmespeicherschicht 61 und einer Wärmedämmschicht 62 ausgebildet sind. Die entlang eines Luftführungskanals 63 ausgebildeten Stufen können alternierend oder in eine Umfangsrichtung verlaufen ausgerichtet sein. Verlaufen die Stufen in eine Umfangsrichtung, können beispielsweise gestuft spiralförmig verlaufende Luftführungskanäle 63 ausgebildet werden. Durch die in die Luftführungskanäle 63 eingebrachten Stufen werden lichte Kanalführungen vermieden. Dadurch können ein Einlaufen der Luftströmung vermieden und hohe Wärmeübertragungsgrade aufrechterhalten werden. Weiterhin wird eine Schallübertragung durch den Wärmespeicher durch erzwungene Reflexionen entlang der Luftführungskanäle 63 reduziert.

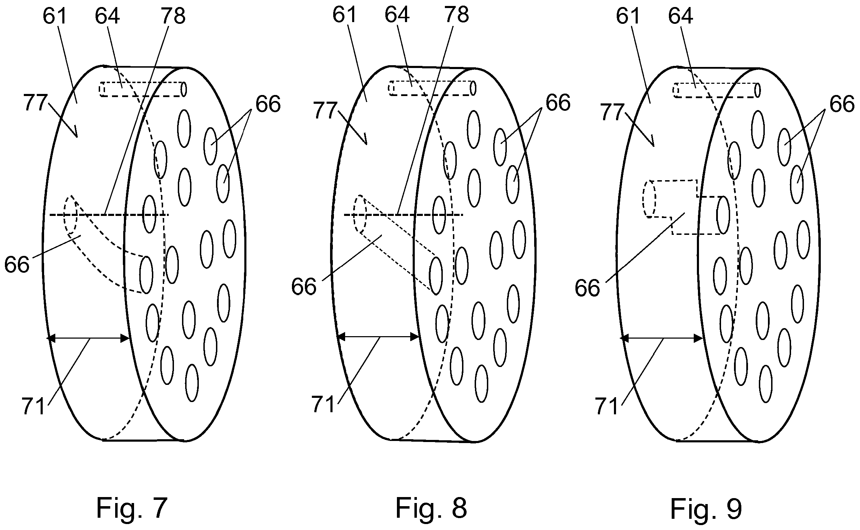

Figur 7 zeigt in einer perspektivischen Seitenansicht eine Wärmespeicherschicht 61 mit gebogen verlaufenden Kanaldurchlässen 66. Dabei ist zur besseren Übersichtlichkeit der Darstellung nur einer der Kanaldurchlässe 66 gezeigt.

Die gegenüberliegend an den Stirnflächen der Wärmespeicherschicht 61 angeordneten Öffnungen eines Kanaldurchlasses 66 sind in Umfangsrichtung versetzt zueinander angeordnet. Durch Aneinanderreihen baugleicher Wärmespeicherschichten 61 werden so gebogen verlaufende, vorliegend spiralförmig verlaufende Luftführungskanäle 63 erhalten. Es ist denkbar, die aufeinanderfolgenden Wärmespeicherschichten 61 derart verdreht zueinander auszurichten, dass zwischen den Kanaldurchlässen 66 benachbarter Wärmespeicherschichten 61 jeweils entweder ein nicht gestufter oder ein gestufter Übergang gebildet ist. Dabei erfolgt die gegenseitige Ausrichtung benachbarter Wärmespeicherschichten 61 mit Hilfe der eingebrachten Positioniermarken 64, die vorliegend als randseitige Bohrung ausgebildet sind.

Vorzugsweise sind auch die Kanaldurchbrüche 67 in den vorgesehenen Wärmedämmschichten 62 gebogen ausgebildet. Insbesondere bei Verwendung von Wärmedämmschichten 62 mit sehr geringen Schichtdicken 72 können jedoch auch geradlinig verlaufende Kanaldurchbrüche 67 vorgesehen sein, um den gewünschten, gebogenen Verlauf der Luftführungskanäle zu erreichen.

Vorzugsweise ist, wie in dem Ausführungsbeispiel gemäß Figur 7 durch eine Markierungslinie 78 kenntlich gemacht, die an einer Stirnseite der Wärmespeicherschicht 61 angeordnete Öffnung eines jeweiligen Kanaldurchbruchs 67 fluchtend zu einer Öffnung eines benachbarten Kanaldurchbruchs 67 auf der gegenüberliegenden Stirnseite der Wärmespeicherschicht 61 angeordnet. Baugleiche Wärmespeicherschichten 61 können so in Umfangsrichtung gleich ausgerichtet zueinander aneinandergereiht werden, um durchgängige Luftführungskanäle 63 zu erhalten. Dazu sind die Kanaldurchbrüche 67 der zwischengeschalteten Wärmedämmschichten 62 vorzugsweise in Achsrichtung ausgerichtet. Es ist auch denkbar, Wärmedämmschichten 62 mit schräg bzw. gebogen verlaufenden Kanaldurchbrüchen 67 vorzusehen. Der zusätzliche Versatz der gegenüberliegend angeordneten Öffnungen der jeweiligen Kanaldurchbrüche 67 einer solchen Wärmedämmschicht 62 ist dann bei der Anordnung der gegenüberliegenden Öffnungen der Kanaldurchlässe 66 der Wärmespeicherschichten 61 zu berücksichtigen.

Figur 8 zeigt in einer perspektivischen Seitenansicht eine Wärmespeicherschicht 61 mit geradlinig verlaufenden Kanaldurchlässen 66. Durch zueinander ausgerichtetes Aneinanderreihen solcher Wärmespeicherschichten 61 kann ein polygonal geformter Verlauf der Luftführungskanäle 63 erreicht werden. Dabei stellt sich auch hier ein spiralförmiger Verlauf der Luftführungskanäle 63 ein. Die gegenüberliegenden Öffnungen zu verbindender Kanaldurchlässe 66 benachbarter Wärmespeicherschichten 61 können durch entsprechendes Verdrehen der Wärmespeicherschichten 61 zueinander in Deckung gebracht werden. Dabei kann ein etwaiger Versatz, wie er durch schräg verlaufende Kanaldurchbrüche 67 der zwischen den Wärmespeicherschichten 61 angeordneten Wärmedämmschichten 62 verursacht werden kann, bei der gegenseitigen Ausrichtung der Wärmespeicherschichten 61 in Umfangsrichtung berücksichtigt werden. Wie bereits zu Figur 7 dargelegt, können auch bei geradlinig und schräg angeordneten Kanaldurchlässen 66 die gegenüberliegend angeordneten Öffnungen benachbarter Kanaldurchlässe 66 einer Wärmespeicherschicht 61 fluchtend oder mit einem zusätzlichen, zum Ausgleich der Wärmedämmschichten 62 erforderlichen Versatz zueinander angeordnet sein. Damit werden durch nicht in Umfangsrichtung zueinander versetzte Aneinanderreihung gleicher Wärmedämmschichten 62 durchgängige, polygonal verlaufende Luftführungskanäle 63 erhalten. Schräg angeordnete, geradlinig verlaufende Kanaldurchlässe 66 können einfach und kostengünstig, beispielsweise durch Bohren, in die Wärmespeicherschichten 61 eingebracht werden.

In Figur 9 ist in einer perspektivischen Seitenansicht eine Wärmespeicherschicht 61 mit gestuft verlaufenden Kanaldurchlässen 66 gezeigt. Benachbarte Wärmespeicherschichten 61 können derart zueinander ausgerichtet werden, dass die einander zugewandten Öffnungen ihrer Kanaldurchlässe 66 fluchtend zueinander ausgerichtet sind. Es ergibt sich so ein gestufter Verlauf der Luftführungskanäle 63. Dabei sind die Stufen innerhalb der Wärmespeicherschichten 61 ausgebildet. Durch axial gleichgerichtetes Aneinanderreihen gleicher Wärmespeicherschichten 61 mit gestuften Kanaldurchlässen wird ein stufenförmiger, spiralförmiger Verlauf der Luftführungskanäle 63 erhalten. Werden die einander zugewandten Stirnseiten benachbarter Wärmespeicherschichten 61 alternierend gedreht, so wird ein alternierend gestufter Verlauf der Luftführungskanäle 63 erhalten. In beiden Fällen ist eine lichte Kanalführung vermieden.

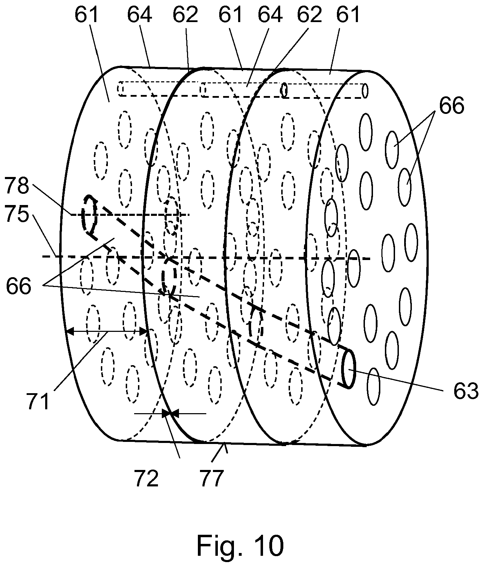

Figur 10 zeigt in einer perspektivischen Seitenansicht eine Abfolge aneinanderliegender Wärmespeicherschichten 61 und Wärmedämmschichten 62. Dabei sind die Wärmespeicherschichten 61 entsprechend der in Figur 8 dargestellten Wärmespeicherschicht 61 mit geradlinig verlaufenden und schräg angeordneten Kanaldurchlässen 66 ausgebildet. Die Wärmedämmschichten 62 sind durch einen die benachbarten Wärmespeicherschichten 61 verbindenden Klebstoff gebildet. Der Klebstoff weist eine geringe, bezüglich der Klebeeigenschaften optimierte Schichtdicke 72 auf. Vorzugsweise ist der Klebstoff während der Montage des Wärmespeichers auf zumindest eine der benachbarten Wärmespeicherschichten 61 aufgetragen, wobei die Öffnungen der Kanaldurchlässe 66 ausgelassen sind. Durch die geringe Schichtdicke der so gebildeten Wärmedämmschichten 62 ergibt sich kein signifikanter Versatz zwischen den gegenüberliegend angeordneten Öffnungen der Kanaldurchbrüche 67 der Wärmedämmschichten 62. Durch die schräge Anordnung der Kanaldurchlässe 66 wird ein polygonal gebogener Verlauf der Luftführungskanäle 63 erreicht, wie er für einen Luftführungskanal 63 exemplarisch dargestellt ist. Die gegenüberliegenden Öffnungen der jeweiligen Kanaldurchlässe 66 sind derart in Umfangsrichtung zueinander versetzt, dass sich bei gleicher Ausrichtung der aufeinanderfolgenden Wärmedämmschichten 61 durchgängige Luftführungskanäle 63 ausbilden. Es ist jedoch auch denkbar, Kanaldurchlässe 66 mit geringeren Neigungen, bezogen auf die Mittellängsachse 75, vorzusehen. Um dann durchgängige Luftführungskanäle 63 zu erhalten müssen die aufeinanderfolgenden Wärmespeicherschichten 61 um einen geeigneten Winkel in Umfangsrichtung zueinander versetzt angeordnet werden, sodass die gegenüberliegenden Öffnungen benachbarter Wärmespeicherschichten 61 deckungsgleich zueinander angeordnet sind. Dies kann durch eine entsprechende Anordnung der Positioniermarken 64 aufeinanderfolgender Wärmespeicherschichten 61 erreicht werden.

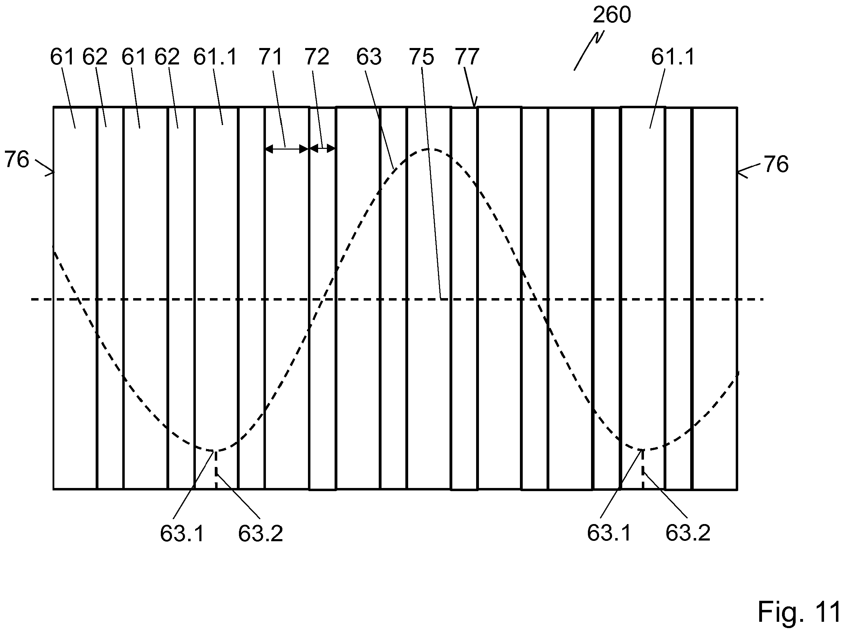

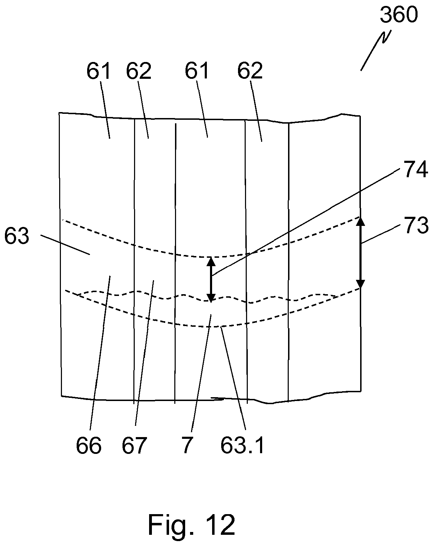

Figur 11 zeigt in einer schematisierten Seitenansicht einen dritten Wärmespeicher 260. Der dritte Wärmespeicher 260 ist durch eine Abfolge von Wärmespeicherschichten 61 und Wärmedämmschichten 62 gebildet, die miteinander verklebt sind. Die Wärmespeicherschichten 61 und die Wärmedämmschichten 62 sind jeweils scheibenförmigen ausgebildet, sodass der dritte Wärmespeicher 260 eine zylindrische Außenkontur aufweist. Der dritte Wärmespeicher 260 ist von einer Vielzahl von Luftführungskanälen 63 durchdrungen, wobei in der gewählten Darstellung der Verlauf von einem Luftführungskanal 63 schematisch gezeigt ist. Aufgrund der Ausrichtung der Kanaldurchlässe 66 der Wärmespeicherschichten 61, der Kanaldurchbrüche 67 der Wärmedämmschichten 62 und der Ausrichtung der aufeinanderfolgenden Wärmespeicherschichten 61 und Wärmedämmschichten 62 in Umfangsrichtung zueinander ergibt sich ein spiralförmiger Verlauf der Luftführungskanäle 63. Dabei bilden sich entlang der Luftführungskanäle 63 Senken 63.1 aus, wie dies für den dargestellten Luftführungskanal 63 gezeigt ist. Beim Abkühlen von warmer, feuchter Luft innerhalb des dritten Wärmespeichers 260 entsteht innerhalb der Luftführungskanäle 63 Kondensat 7, wie es in Figur 12 gezeigt ist. Das Kondensat 7 fließt in die Senke 63.1 oder in die Senken 63.1 der jeweiligen Luftführungskanäle 63 und sammelt sich dort an. Um dieses Kondensat 7 abzuleiten ist gemäß der dargestellten Ausführung des dritten Wärmespeichers 260 an gesonderten Kondensat-Ablaufelementen 61.1 jeweils eine Kondensatabführung 63.2 zu den Senken 63.1 geführt. Die Kondensatabführung 63.2 kann, wie vorliegend gezeigt, als radial ausgerichtete Bohrung vom äußeren Umfang eines Kondensat-Ablaufelements 61.1 zu der jeweiligen Senke 63.1 geführt sein. Abgesehen von den Kondensatabführung 63.2 sind die Kondensat-Ablaufelemente 61.1 entsprechend der benachbarten Wärmespeicherschichten 61 ausgebildet. Sie dienen somit auch der Wärmespeicherung. Es ist auch denkbar, die Kondensatabführung 63.2 innerhalb einer Wärmedämmschicht 62 zu einer dann innerhalb der Wärmedämmschicht 62 ausgebildeten Senke 63.1 zu führen. Dazu kann die Wärmedämmschicht 62 beispielsweise als Klebstoff ausgebildet sein, der im Bereich der Senke einen nach außen offenen Kanal ausspart. Das Kondensat 7 kann über die Kondensatabführungen 63.2 aus dem dritten Wärmespeicher 260, beispielsweise in einen außerhalb des dritten Wärmespeichers 260 angeordneten Abflusskanal der Lüftungsvorrichtung 1, abfließen.

Figur 12 zeigt in einer schematisierten Seitenansicht einen Ausschnitt eines Luftführungskanals 63 im Bereich einer Senke 63.1 eines teilweise dargestellten, vierten Wärmespeichers 360. Die Senke 63.1 erstreckt sich über mehrere Kanaldurchlässe 66 und Kanaldurchbrüche 67 benachbarter Wärmespeicherschichten 61 und Wärmedämmschichten 62. In der Senke 63.1 hat sich Kondensat 7 angesammelt. Durch das Kondensat 7 ist im Bereich der Senke 63.1 ein gegenüber einem Kanaldurchmesser 73 des Luftführungskanals 63 reduzierter Kanalquerschnitt 74 ausgebildet. Im Betrieb der Lüftungsvorrichtung 1 wird sich somit im Bereich der Senke 63.1 bei Vorliegen von Kondensat 7 eine erhöhte Strömungsgeschwindigkeit der in dem Luftführungskanal 63 geführten Luft ausbilden. Dadurch steigen die Konvektion und der Stoffübergangskoeffizient. Je höher die angefallene Menge an Kondensat 7 in einer Senke 63.1 ist, desto größer ist daher dessen Verdunstungsrate.

Beim Absaugen von warmer, feuchter Luft aus einem Innenraum eines Gebäudes gibt diese ihrer Wärmeenergie zumindest teilweise an die Wärmespeicherschichten 61 des vierten Wärmespeichers 360 ab. Dabei bildet sich Kondenswasser (Kondensat 7), welches sich in den Senken 63.1 der Luftführungskanäle 63 ansammelt. Bei einer anschließenden Belüftung des Innenraums wird kalte, trockene Luft aus einem Außenbereich des Gebäudes durch die Luftführungskanäle 63 geleitet. Dabei geben die Wärmespeicherschichten 61 zumindest einen Teil ihrer Wärmeenergie an die in den Luftführungskanälen 63 geführten Luft ab und wärmen diese auf. Im Bereich der Senken 63.1 wird die weiterhin trockene Luft an dem gesammelten Kondensat 7 vorbeigeführt. Dabei verdunstet zumindest ein Teil des Kondensats 7, wodurch die zuvor trockene Luft angefeuchtet wird. Durch den reduzierten Kanalquerschnitt 74 und die damit erzielte, hohe Strömungsgeschwindigkeit der Luft werden hohe Verdunstungsraten erreicht. Das aufgefangene Kondensat 7, welches bewusst nicht abläuft, verdunstet somit zumindest teilweise und wird der Raumluft als Feuchte zurückgeführt. Es wird, insbesondere bei kalten Außentemperaturen, eine Rückbefeuchtung der Raumluft erreicht. Ist die Verdunstungsleistung des vierten Wärmespeichers 360 zu gering, um eine ausreichende Verdunstung des anfallenden Kondensats 7 zu erreichen, so können zusätzliche Maßnahmen getroffen werden, um die Verdunstungsrate zu erhöhen. So können nicht dargestellt vorzugsweise dem Innenraum des Gebäudes zugewandt eine oder mehrere Schichten mit großen Oberflächen angeordnet werden. Diese zusätzlichen Schichten können beispielsweise porös ausgebildet sein. Durch die so auf das Kondensat 7 einwirkenden Kapillarkräfte wird dieses verteilt, wodurch die Verdunstungsleistung erhöht wird. Bei einer vollständigen Rückbefeuchtung kann vorteilhaft auf einen Kondensatabfluss verzichtet werden. Der Grad der Rückbefeuchtung kann durch geeignete Ansteuerung der Lüftungsvorrichtung 1 beeinflusst werden. So kann durch entsprechende Steuerung der Be- und Entlüftungsintervalle die Luftfeuchtigkeit in dem Innenraum und/oder die in dem vierten Wärmespeicher 63 vorliegende Kondensatmenge geregelt werden. Auch ist es denkbar, vorzugsweise im Innenraum oder dem Innenraum zugewandt geeignete Feuchtesensoren zur Bestimmung der Feuchte der Raumluft vorzusehen. Die so gemessene Luftfeuchtigkeit kann bei der Ansteuerung der Lüftungsverrichtung 1, beispielsweise über die in Figur 1 gezeigte Drahtlos-Kommunikationseinrichtung, berücksichtigt werden.

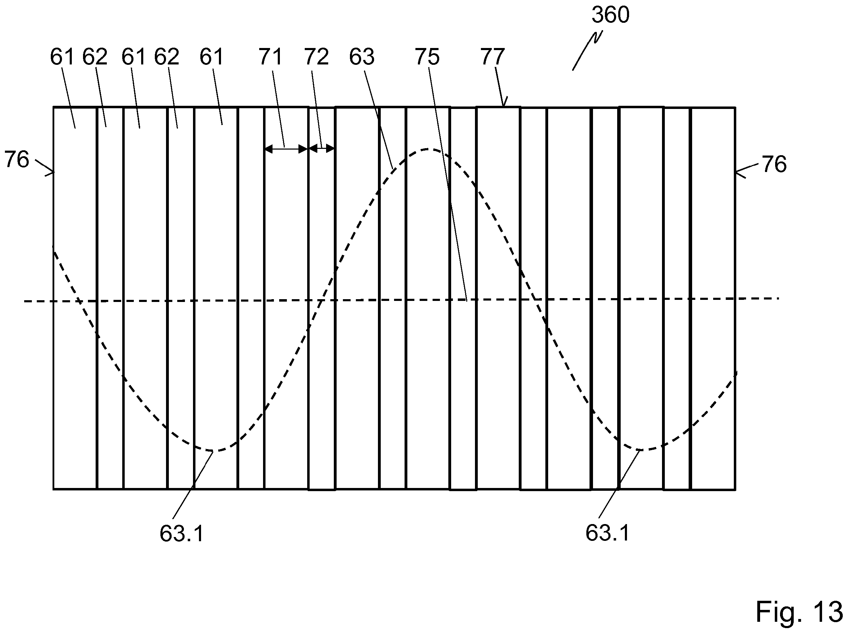

Figur 13 zeigt in einer schematisierten Seitenansicht den in Figur 12 teilweise gezeigten, vierten Wärmespeicher 360. Die Luftführungskanäle 63, von denen vorliegend nur einer schematisiert dargestellt ist, sind gebogen, vorliegend spiralförmig, durch den vierten Wärmespeicher 63 geführt. Dadurch bilden sich entlang der Luftführungskanäle 63 eine oder mehrere Senken 63.1 aus, in denen sich, wie zu Figur 12 beschrieben, Kondensat 7 ansammeln kann. Der vierte Wärmespeicher 360 ist um seine Mittellängsachse 75 drehbar gelagert. Die Menge der Rückbefeuchtung, wie sie zu Figur 12 beschrieben ist, kann durch Einstellung der in dem vierten Wärmespeicher 360 verbleibenden Kondensatmenge beeinflusst werden. Dazu wird der vierte Wärmespeicher 360 mit einer definierten Geschwindigkeit um seine Mittellängsachse 75 gedreht. Durch die Drehung läuft zumindest ein Teil des Kondensats 7 vor der Verdunstung aus dem vierten Wärmespeicher 360 heraus und vorzugsweise in einen nicht dargestellten Kondensatabfluss. Vorteilhaft kann die Drehung mit Hilfe der in Figur 1 gezeigten elektrischen/elektronischen Komponente 34 gesteuert werden. Durch entsprechende Vorgabe der Drehung des vierten Wärmespeichers 360 kann der Feuchtegehalt der Raumluft beeinflusst werden. Dazu ist es denkbar, den Feuchtegehalt der Raumluft mittels geeigneter Sensoren zu bestimmen und die daraus resultierende, gewünschte Drehzahl des vierten Wärmespeichers 360 mittels der ebenfalls in Figur 1 gezeigten Drahtlos-Kommunikationseinrichtung 35 an Vorrichtung 1 zu übertragen.

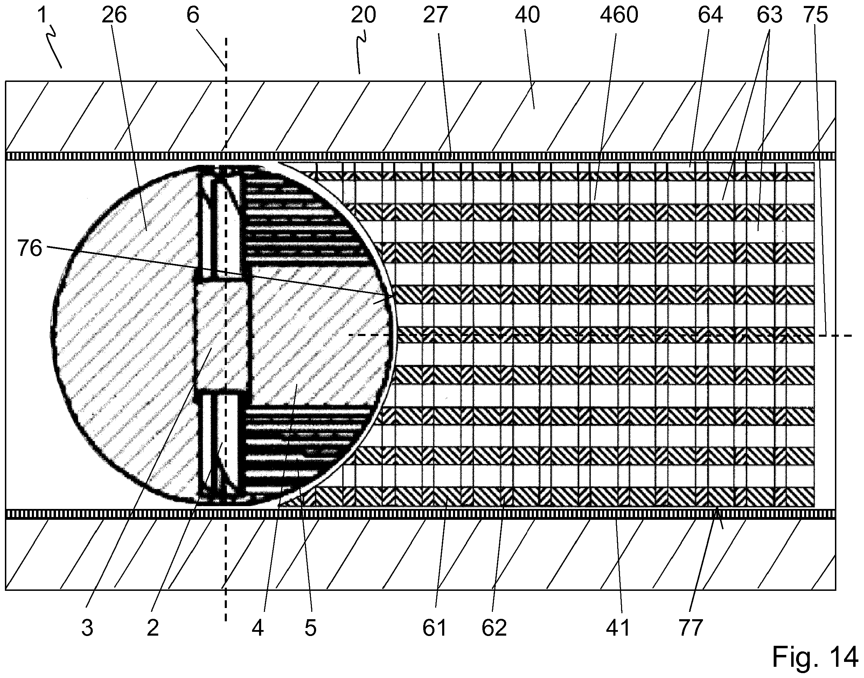

Figur 14 zeigt in einer seitlichen Schnittdarstellung einen Ausschnitt einer in die Gebäudewand 40 eingesetzten Lüftungsvorrichtung 1 im Bereich des Mittenabschnitts 20. In die Öffnung 41 der Gebäudewand 40 ist ein Rohr 27 der Lüftungsvorrichtung 1 eingesteckt. Das Rohr 27 weist vorliegend einen kreisrunden Querschnitt auf. In dem Rohr 27 ist der Ventilator 2 mit seinem zugeordneten Lüftermotor 3 angeordnet. Der Ventilator 2 ist als Axiallüfter ausgebildet. An dem Ventilator 2 ist der Luftfilter 26 befestigt. Gegenüberliegend zu dem Luftfilter 26 ist ein Luftführungsteil 4 mit dem Ventilator 2 verbunden. Der Luftfilter 26 und das Luftführungsteil 4 weisen eine halbkugelförmige Außenkontur auf. Dabei sind ihre Ebenen Oberflächen dem Ventilator 2 zugewandt.

Der Ventilator 2 mit dem verbundenen Luftfilter 26 und Luftführungsteil 4 sind um eine quer zur Längserstreckung des Rohres 27 verlaufenden Schwenkachse 6 schwenkbar gelagert.

Das Luftführungsteil 4 ist im Bereich der Flügel des Ventilators 2 von Kanälen 5 durchbrochen. Die Kanäle 5 sind vorliegend linear und parallel zueinander verlaufen ausgerichtet.

Durch einen Spalt zu der Kugeloberfläche des Luftführungsteils 4 beabstandet ist ein fünfter Wärmespeicher 460 in dem Rohr 27 angeordnet. Der fünfte Wärmespeicher 460 ist, wie zuvor beschrieben, durch eine Abfolge von Wärmespeicherschichten 61 und Wärmedämmschichten 62 gebildet. Die Wärmespeicherschichten 61 und die Wärmedämmschichten 62 sind vorliegend jeweils mit einem Klebstoff verbunden. Der fünfte Wärmespeicher 460 weist eine zylinderförmige Mantelfläche 77 auf. Die Luftführungskanäle 63 sind geradlinig und axial verlaufend durch die aufeinanderfolgenden Wärmespeicherschichten 61 und Wärmedämmschichten 62 des fünften Wärmespeichers 460 geführt.

Dem Luftführungsteil 4 zugewandt sind die Wärmespeicherschichten 61 und Wärmedämmschichten 62 des fünften Wärmespeichers 460 ringförmig ausgebildet. Dabei vergrößert sich der Innendurchmesser der Ringe mit der Abfolge der Wärmespeicherschichten 61 und Wärmedämmschichten 62 zu dem Luftführungsteil 4 hin. Der fünfte Wärmespeicher 460 bildet so auf seiner dem Luftführungsteil 4 zugewandte Stirnfläche 76 eine negative Kugelform aus. Diese ist an die Kugelform des Luftführungsteils 4 angepasst. Luft kann somit von dem Ventilator durch die Kanäle 5 des Luftführungsteils 4 zu den Luftführungskanälen 63 des fünften Wärmespeichers 460 transportiert werden. Zur Umkehr der Strömungsrichtung der geförderten Luft können der Ventilator 2 mit dem angekoppelten Luftfilter 26 und Luftführungsteil 4 um die Schwenkachse 6 gedreht werden, sodass der Luftfilter 26 dem fünften Wärmespeicher 460 zugewandt ist. Die Luft wird jetzt von dem Ventilator 2 durch die Luftführungskanäle 63 des fünften Wärmespeichers 460, den Luftfilter 26 und die Kanäle 5 des Luftführungsteils 4 gefördert. Vorteilhaft wird somit der Luftfilter 26 bei beiden Förderrichtung der Lüftungsvorrichtung 1 nur in einer Richtung durchströmt. Verunreinigungen und Partikel setzen sich somit nur auf einer Seite des Luftfilters 26 ab und können bei einer Umkehr der Strömungsrichtung nicht von dem Luftfilter 26 gelöst und von dem Luftstrom mitgerissen werden. Der Staub- und Partikeleintrag in Gebäude kann so signifikant verringert werden.

Die kugelförmige Ausbildung der aus dem Ventilator 2, dem Luftfilter 26 und dem Luftführungsteil 4 bestehenden Baueinheit ermöglicht deren Drehung innerhalb des zylinderförmigen Rohres 27. Durch die negative Kugelform der dieser Baueinheit zugeordneten Stirnfläche 76 des fünften Wärmespeichers 460 kann der fünfte Wärmespeicher 460 bis unmittelbar an das Luftführungsteil 4 bzw. den Luftfilter 26 herangeführt werden. Dies führt zu einem kompakten Aufbau der Lüftungsvorrichtung 1 und zu einem geringen Spalt zwischen dem Luftfilter 26 bzw. dem Luftführungsteil 4 und dem fünften Wärmespeicher 460.

Es ist denkbar, das Luftführungsteil 4 ebenfalls durch eine Abfolge von Wärmespeicherschichten 61 und Wärmedämmschichten 62, durch welche die Kanäle 5 geführt sind, auszubilden. Das Luftführungsteil 4 dient dann ebenfalls zur Regeneration von Wärmeenergie.

Es ist ebenfalls denkbar, die Kanäle 5 des Luftführungsteils 4 jeweils auf Luftführungskanäle 63 des fünften Wärmespeichers 460 auszurichten. Die geförderte Luft kann so mit vergleichsweise geringen Strömungswiderstand von dem Luftführungsteil 4 zu dem fünften Wärmespeicher 460 übergeleitet werden.

Entsprechend einer nicht gezeigten Ausführungsvariante der Erfindung kann es weiterhin vorgesehen sein, den Mittenabschnitt 20 innerhalb eines rechteckigen Rohres 27 anzuordnen. Der Ventilator 2 kann dann beispielsweise als Walzenlüfter ausgebildet sein. Der Luftfilter 26 und das Luftführungsteil 4 sind bei einer solchen Anordnung vorzugsweise als Halbzylinder ausgebildet, wobei die Schwenkachse 6 der so gebildeten Baugruppe in Richtung der Längserstreckung der Halbzylinder ausgerichtet ist. Eine solche Baugruppe kann innerhalb des rechteckigen Rohres 27 bei geringem, einfach abzudichtenden Abstand zu dem Rohr 27 um die Schwenkachse 6 gedreht werden, sodass auch hier der Luftfilter 26 und vorzugsweise auch der Ventilator 2 bei alternierender Strömungsrichtung der in der Lüftungsvorrichtung 1 geförderten Luft nur in eine Richtung durchströmt werden.

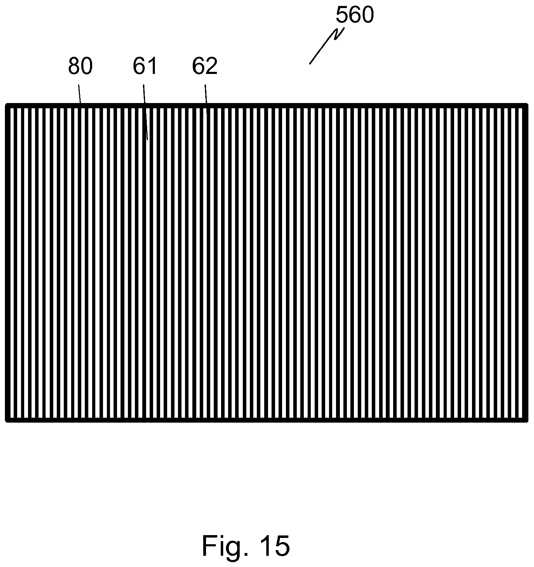

Figur 15 zeigt in einer schematisierten, nicht maßstabsgerechten Seitenansicht einen sechsten Wärmespeicher 560. Der sechste Wärmespeicher 560 ist aus einer Abfolge von Wärmespeicherschichten 61 und Wärmedämmschichten 62 gebildet. Die Wärmespeicherschichten 61 und die Wärmedämmschichten 62 sind als kreisrunde Scheiben ausgebildet. Der sechste Wärmespeicher 560 ist somit zylinderförmig ausgebildet. In axialer Richtung ist der sechste Wärmespeicher 560 von verdeckt angeordneten Luftführungskanälen 63 durchbrochen.

Die Wärmespeicherschichten 61 sind als Blechteile ausgebildet. Vorliegend sind sie aus einem Stahlblech der Werkstoffnummer 1.1203, vorzugsweise durch einen Stanzprozess, hergestellt. Die Materialstärke der Wärmespeicherschichten 61 liegt fertigungsbedingt vorzugsweise in einem Bereich zwischen 0,5 mm und 5 mm, im gezeigten Ausführungsbeispiel bei 1 mm. Zum Aufbrechen der laminar ausgebildeten Strömung sind Kanalsprünge abhängig von der Reynoldszahl von 0,1 mm bis 50 mm zu erwarten. Diese Sprünge können durch das periodische Versetzen von Scheibenansammlung leicht realisiert werden. Die Wärmespeicherschichten 61 sind durch eine Vielzahl von Kanaldurchlässen 66 durchbrochen, wie diese in den Figuren 4, 6, und 7 -10 gezeigt sind. Die Kanaldurchlässe 66 sind geradlinig und in Achsrichtung verlaufend durch die jeweiligen Wärmespeicherschichten 61 geführt.

Die Wärmedämmschichten 62 sind als Kunststofffolien ausgebildet. Vorliegend sind Wärmedämmschichten 62 aus PTFE-Folien vorgesehen. Sie weisen eine Schichtdicke 72 von kleiner 1 mm, bevorzugt in einem Bereich von 50 µm bis 500 µm, auf. In dem in Figur 15 gezeigten Ausbildungsbeispiel sind Wärmedämmschichten 62 mit einer Schichtdicke 72 von 250 µm verwendet. Die Wärmedämmschichten 62 sind von Kanaldurchbrüchen 67 durchbrochen, wie diese in den Figuren 5 und 12 gezeigt sind. Die Kanaldurchbrüchen 67 sind auf den Wärmedämmschichten 62 gleich der Kanaldurchlässe 66 auf den Wärmespeicherschichten 61 angeordnet.

Die Wärmedämmschichten 62 sind mit den benachbarten Wärmespeicherschichten 61 verklebt. Nicht dargestellt sind am äußeren Umfang der Wärmespeicherschichten 61 und Wärmedämmschichten 62 Positioniermarken 64 angeordnet. Die Positioniermarken 64 sind vorliegend gleichmäßig über den Umfang der jeweiligen Wärmespeicherschichten 61 und Wärmedämmschichten 62 angeordnet. Anhand der Positioniermarken 64 können die aufeinanderfolgenden Wärmespeicherschichten 61 und Wärmedämmschichten 62 in Umfangsrichtung zueinander ausgerichtet werden. Vorliegend sind aufeinanderfolgende Wärmespeicherschichten 61 in Umfangsrichtung zueinander versetzt angeordnet, wodurch sich zwischen benachbarten Wärmespeicherschichten jeweils ein Versatz zwischen den Kanaldurchlässen 66 ergibt. Jeder Wärmespeicherschicht 61 ist dabei eine Wärmedämmschicht 62 mit gleicher Ausrichtung in Umfangsrichtung zugeordnet. Es ergibt sich so ein gestuft gebogener Verlauf der durch den sechsten Wärmespeicher 560 geführten Luftführungskanäle 63.

Der geschichtete Aufbau der erfindungsgemäßen Wärmespeicher 60, 160, 260, 360, 460, 560 erlaubt nahezu alle Freiheitsgrade der dreidimensionalen Geometriegestaltung. Besonders das Einsetzen von kleinen Stufen in den Luftführungskanälen 63 gestattet das stetige Aufbrechen der Strömung und damit das Verhindern einer ausgebildeten Strömung. Die Wärmespeicher 60, 160, 260, 360, 460, 560 bestehen jeweils aus einer definierten Anzahl von Wärmespeicherschichten 61 und Wärmedämmschichten 62. Die Wärmespeicherschichten 61 dienen der Zwischenspeicherung der Wärmeenergie. Sie weisen daher vorzugsweise eine hohe Masse und eine hohe spezifische Wärmekapazität auf. Die Wärmedämmschichten 62 erhalten das Temperaturprofil entlang der Achse des Wärmespeichers 60, 160, 260, 360, 460, 560. Sie weisen daher vorzugsweise eine niedrige spezifische Wärmeleitfähigkeit auf. Das Gestalten der einzelnen Wärmespeicherschichten 61 bzw. Wärmedämmschichten 62 oder einfach das gezielte verdrehen ausführungsgleicher Wärmespeicherschichten 61 bzw. Wärmedämmschichten 62 ermöglicht die Abkehr von lichten Luftführungskanälen 63. Die Treppen in den Luftführungskanälen 63 verhindern das Einlaufen der Strömung und halten dadurch hohe Wärmeübertragungsgrade aufrecht. Es sind beliebige Formen von Luftführungskanälen 63 möglich. Durch Aneinanderreihen unterschiedlicher Wärmespeicherschichten 61 bzw. Wärmedämmschichten 62 kann von einer zylinderförmigen Stirnfläche 76 des Wärmespeichers 60, 160, 260, 360, 460, 560 abgewichen werden. Die Stirnflächen 76 des Wärmespeichers 60, 160, 260, 360, 460, 560 können so an die Geometrie angrenzender Bauteile angepasst werden. Die Strömungswiderstände des Wärmespeichers 60, 160, 260, 360, 460, 560 können über seinen gesamten Querschnitt angepasst werden. Dadurch kann eine gezielte Verteilung der Wärmekapazitätsströme erreicht werden.

Durch das Auffangen von Kondensat 7 in Senken 63.1 der Luftführungskanäle 63 kann eine gezielte Rückfeuchtung der Raumluft erreicht werden. Dabei kann durch eine gezielte Manipulation der Menge des in dem Wärmespeicher 60, 160, 260, 360, 460, 560 aufgenommenen Kondensats 7 die Luftfeuchtigkeit der Raumluft nach Wunsch eingestellt werden.

Die Herstellung der Wärmespeicherschichten 61 und der Wärmedämmschichten 62 aus kostengünstigen, plattenförmig oder in Form von Folien verfügbaren Materialien ermöglicht eine kostengünstige Fertigung des Wärmespeichers 60, 160, 260, 360, 460, 560. Durch Verwendung von Klebstoff als Wärmedämmschichten 62, der gleichzeitig auch zum Verkleben benachbarter Wärmespeicherschichten 61 vorgesehen ist, können die Herstellkosten weiter gesenkt werden. Durch geeignetes Beschichten der einzelnen Wärmespeicherschichten 61 bzw. Wärmedämmschichten 62 oder des gesamten Wärmespeichers 60, 160, 260, 360, 460, 560 kann eine Korrosion des Wärmespeichers 60, 160, 260, 360, 460, 560 vermieden werden.

Der Wärmespeicher 60, 160, 260, 360, 460, 560 kann in einer bevorzugten Ausführungsform die Luftführung 24 der prioritätsbegründenden Anmeldung DE 10 2017110 336.8 darstellen, welche vollumfänglich durch Zitierung auch zum Gegenstand der vorliegenden Anmeldung gemacht wird und dieser Anmeldung in Kopie beigeschlossen ist.

Die Luftführung 24 des Wärmespeichers 60, 160, 260, 360, 460, 560 kann dabei wie vorstehend beschrieben schichtenweise aufgebaut sein, welches es insbesondere gestattet, im Wesentlichen dreidimensionale Kanal- und/oder Speichergeometrien, insbesondere Wärmespeichergeometrien aufzubauen. Hierbei kann die Luftführung schichtenweise Treppen im jeweiligen Kanal, insbesondere Luftführungskanal erzeugen, welche die Strömung vom Einlauf abhalten und somit die Konvektion über die Lauflänge erhöht belassen und akustische Reflexionen zur Dämpfung erhöhen.

Hierzu kann die äußere Abmessung des Wärmespeichers 60, 160, 260, 360, 460, 560 kugel- oder walzenförmig ausgebildet sein, wie es insbesondere den Figuren 1, 2, 3, 4, 5, 6, 8, 10 11, 15, 17 und 18 sowie der zugehörigen Beschreibung zu entnehmen ist.

### Bezugszeichenliste

- 1: Lüftungsvorrichtung
- 2: Ventilator
- 3: Lüftermotor
- 4: Luftführungsteil
- 5: Kanal
- 6: Schwenkachse
- 7: Kondensat
- 10: Außenabschnitt
- 11: Außengehäuse
- 12: äußere Wandanlagefläche
- 13: äußere Blende
- 14: Verschlussdeckel
- 15: Grobfilter
- 16: äußerer Kragen
- 17: außenseitige Düse
- 18: Solarzelle
- 20: Mittenabschnitt
- 21: Dämm-Material
- 22: Griff
- 23: Einheit mit Wärmespeicher
- 24: Halter
- 25: Trennabschnitt
- 26: Luftfilter
- 27: Rohr
- 30: Innenabschnitt
- 31: Verbindungseinrichtung
- 32: innere Wandanlagefläche
- 33: innere Blende
- 34: elektrische/elektronische Komponente
- 35: Drahtlos-Kommunikationseinrichtung
- 36: innerer Kragen
- 37: innenseitige Düse
- 38: Energiespeicher
- 39: Hohlraum
- 40: Gebäudewand
- 41: Öffnung in Gebäudewand
- 42: vibrationsdämpfendes Material
- 50: Düsenöffnung
- 51: ringförmiger Spalt
- 52: innere Strömungsoberfläche
- 53: zur Wand hin geneigter Bereich der inneren Strömungsoberfläche
- 55: innerer Wulst
- 56: äußerer Wulst
- 57: zur Wand hin geneigter Bereich der äußeren Strömungsoberfläche
- 58: Einströmrichtung
- 59: Ausströmrichtung
- 60: erster Wärmespeicher
- 61: Wärmespeicherschicht
- 61.1: Kondensat-Ablaufelement
- 62: Wärmedämmschicht
- 63: Luftführungskanal
- 63.1: Senke
- 63.2: Kondensatabführung
- 64: Positioniermarke
- 65: Montagekanal
- 66: Kanaldurchlass
- 67: Kanaldurchbruch
- 68: Montagebohrung
- 70: Länge L
- 71: Materialstärke Speicherschicht
- 72: Schichtdicke Dämmschicht
- 73: Kanaldurchmesser
- 74: reduzierter Kanalquerschnitt
- 75: Mittellängsachse
- 76: Stirnfläche
- 77: Mantelfläche
- 78: Markierungslinie
- 80: Schutzschicht
- 160: zweiter Wärmespeicher
- 161: Gewindestange
- 162: Unterlegscheibe
- 163: Mutter
- 164: Spannvorrichtung
- 260: dritter Wärmespeicher
- 360: vierter Wärmespeicher
- 460: fünfter Wärmespeicher
- 560: sechster Wärmespeicher

## Patentansprüche

1. Wärmespeicher (60, 160, 260, 360, 460, 560) zur Aufnahme von Wärmeenergie von einem Luftstrom und zur Abgabe von Wärmeenergie an einen Luftstrom einer raumlufttechnischen Lüftungsvorrichtung (1), wobei der Wärmespeicher (60, 160, 260, 360, 460, 560) zumindest einen Luftführungskanal (63) zur Führung des Luftstroms aufweist, und wobei der Wärmespeicher (60, 160, 260, 360, 460, 560) zwei oder mehrere aufeinanderfolgende Wärmespeicherschichten (61) aufweist, welche gegeneinander vorzugsweise durch jeweils zumindest eine Wärmedämmschicht (62) thermisch isoliert sind, **dadurch gekennzeichnet, dass** der zumindest eine Luftführungskanal (63) durch zumindest einen Teil der Wärmespeicherschichten (61) und die dazwischen angeordnete Wärmedämmschicht (62) oder Wärmedämmschichten (62) geführt ist, dass die Wärmespeicherschichten (61) jeweils von einem oder mehreren Kanaldurchlässen (66) durchdrungen sind, dass die Wärmedämmschicht (62) oder die Wärmedämmschichten (62) von jeweils einem oder mehreren Kanaldurchbrüchen (67) durchbrochen sind, und dass Kanaldurchlässe (66) und Kanaldurchbrüche (67) der aufeinanderfolgenden Wärmespeicherschichten (61) und Wärmedämmschichten (62) derart zueinander ausgerichtet sind, dass sie den zumindest einen Luftführungskanal (63) ausbilden.

2. Wärmespeicher (60, 160, 260, 360, 460, 560) nach Anspruch 1, **dadurch gekennzeichnet, dass** die Wärmespeicherschichten (61) aus einem Material mit einer Wärmekapazität in einem Bereich von 400 J/(kg·K) bis 4200 J/(kg·K) gebildet sind.

3. Wärmespeicher (60, 160, 260, 360, 460, 560) nach Anspruch 1 oder 2, **dadurch gekennzeichnet, dass** die Wärmedämmschicht (62) oder die Wärmedämmschichten (62) aus einem Material mit einer Wärmeleitzahl kleiner als 0,5 W/(m·K), bevorzugt kleiner als 0,3 W/(m·K), gebildet sind.

4. Wärmespeicher (60, 160, 260, 360, 460, 560) nach einem der Ansprüche 1 bis 3, **dadurch gekennzeichnet, dass** die Wärmespeicherschichten (61) und die jeweils benachbarten Wärmedämmschichten (62) des Wärmespeichers (60, 160, 260, 360, 460, 560) jeweils an Kontaktflächen flächig aneinander anliegen oder an Kontaktflächen stoffschlüssig oder kraftschlüssig miteinander verbunden sind.

5. Wärmespeicher (60, 160, 260, 360, 460, 560) nach einem der Ansprüche 1 bis 4, **dadurch gekennzeichnet, dass** zumindest ein Teil der Wärmespeicherschichten (61) und der Wärmedämmschichten (62) des Wärmespeichers (60,160, 260, 360, 460, 560) eben ausgebildet sind oder dass zumindest ein Teil der Wärmespeicherschichten (61) und/oder der Wärmedämmschichten des Wärmespeichers (60, 160, 260, 360, 460, 560) um jeweils eine Achse gebogen ausgebildet sind oder dass zumindest ein Teil der Wärmespeicherschichten (61) und/oder der Wärmedämmschichten des Wärmespeichers (60, 160, 260, 360, 460, 560) gewölbt ausgebildet sind.

6. Wärmespeicher (60, 160, 260, 360, 460, 560) nach einem der Ansprüche 1 bis 5, **dadurch gekennzeichnet, dass** der zumindest eine Luftführungskanal (63) geradlinig durch den Wärmespeicher (60, 160, 260, 360, 460, 560) geführt ist oder dass der zumindest eine Luftführungskanal (63) auf einer gebogenen, vorzugsweise auf einer spiralförmigen, und/oder gestuften Bahn durch den Wärmespeicher (60, 160, 260, 360, 460, 560) geführt ist.

7. Wärmespeicher (60, 160, 260, 360, 460, 560) nach einem der Ansprüche 1 bis 6, **dadurch gekennzeichnet, dass** die an den gegenüberliegenden Oberflächen einer jeweiligen Wärmespeicherschicht (61) angeordneten Öffnungen eines Kanaldurchlasses (66), bezogen auf die Mittellängsachse (75) des Wärmespeichers (60, 160, 260, 360, 460, 560), fluchtend zueinander angeordnet sind oder dass die an den gegenüberliegenden Oberflächen einer jeweiligen Wärmespeicherschicht (61) angeordneten Öffnungen eines Kanaldurchlasses (66), bezogen auf die Mittellängsachse (75) des Wärmespeichers (60, 160, 260, 360, 460, 560), seitlich versetzt zueinander angeordnet sind.

8. Wärmespeicher (60, 160, 260, 360, 460, 560) nach einem der Ansprüche 1 bis 7, **dadurch gekennzeichnet, dass** der Kanaldurchlass (66) oder die Kanaldurchlässe (66) einer Wärmespeicherschicht (61) geradlinig oder gebogen oder gestuft verlaufend ausgebildet sind.

9. Wärmespeicher (60, 160, 260, 360, 460, 560) nach einem der Ansprüche 1 bis 8, **dadurch gekennzeichnet, dass** der Kanaldurchlass (66) oder die Kanaldurchlässe (66) einer Wärmespeicherschicht (61) zwischen ihren Öffnungen jeweils einen konstanten Querschnitt aufweisen oder dass der Kanaldurchlass (66) oder die Kanaldurchlässe (66) einer Wärmespeicherschicht (61) zwischen ihren Öffnungen jeweils einen sich verändernden Querschnitt aufweisen und/oder dass Kanaldurchlässe (66) einer Wärmespeicherschicht unterschiedliche Querschnitte aufweisen und/oder dass einen Luftführungskanal (63) bildende Kanaldurchlässe (66) aufeinanderfolgender Wärmespeicherschichten (61) eines Wärmespeichers (60, 160, 260, 360, 460, 560) zumindest teilweise unterschiedliche Querschnitte aufweisen.

10. Wärmespeicher (60, 160, 260, 360, 460, 560) nach einem der Ansprüche 1 bis 9, **dadurch gekennzeichnet, dass** benachbarte Wärmespeicherschichten (61) zumindest in einem Teilbereich des Wärmespeichers (60, 160, 260, 360, 460, 560) bezüglich der Ausrichtung und Anordnung der Kanaldurchlässe (66) gleich ausgebildet sind und dass die Wärmespeicherschichten (61) gleich zueinander ausgerichtet sind.

11. Wärmespeicher (60, 160, 260, 360, 460, 560) nach einem der Ansprüche 1 bis 10, **dadurch gekennzeichnet, dass** benachbarte Wärmespeicherschichten (61) zumindest in einem Teilbereich des Wärmespeichers (60, 160, 260, 360, 460, 560) bezüglich der Ausrichtung und Anordnung der Kanaldurchlässe (66) gleich ausgebildet sind und dass die Wärmespeicherschichten (61) in Umfangsrichtung um die Mittellängsachse (75) des Wärmespeichers (60, 160, 260, 360, 460, 560) zueinander gedreht ausgerichtet sind.

12. Wärmespeicher (60, 160, 260, 360, 460, 560) nach einem der Ansprüche 1 bis 11, **dadurch gekennzeichnet, dass** an den Wärmespeicherschichten (61) und/oder der Wärmedämmschicht / den Wärmedämmschichten (62) des Wärmespeichers (60, 160, 260, 360, 460, 560) jeweils zumindest eine Positioniermarke (64) zur gegenseitigen Ausrichtung der Wärmespeicherschichten (61) und/oder der Wärmedämmschicht / der Wärmedämmschichten (62) zueinander angeordnet ist, bevorzugt dass die Positioniermarke (64) als Ausnehmung oder als Einkerbung ausgebildet ist.

13. Wärmespeicher (60, 160, 260, 360, 460, 560) nach einem der Ansprüche 1 bis 12, **dadurch gekennzeichnet, dass** die gegenüberliegend angeordneten Stirnflächen des Wärmespeichers (60, 160, 260, 360, 460, 560) eben ausgebildet sind oder dass zumindest eine der gegenüberliegend angeordneten Stirnflächen des Wärmespeichers (60, 160, 260, 360, 460, 560) gewölbt ausgebildet ist.

14. Wärmespeicher (60,160, 260, 360, 460, 560) nach einem der Ansprüche 1 bis 13, **dadurch gekennzeichnet, dass** die Wärmespeicherschichten (61) des Wärmespeichers (60, 160, 260, 360, 460, 560) gleiche Materialstärken (71) aufweisen oder dass die Wärmespeicherschichten (61) des Wärmespeichers (60,160, 260, 360, 460, 560) unterschiedliche Materialstärken (71) aufweisen, bevorzugt dass sich die Materialstärken (71) der entlang des zumindest einen Luftführungskanals (63) aufeinanderfolgenden Wärmespeicherschichten (61) stetig verändern, besonders bevorzugt dass sich die Materialstärken (71) der entlang des zumindest einen Luftführungskanals (63) aufeinanderfolgenden Wärmespeicherschichten (61) in Strömungsrichtung der Wärme abgebenden Luft stetig vergrößern.

15. Wärmespeicher (60, 160, 260, 360, 460, 560) nach einem der Ansprüche 1 bis 14, **dadurch gekennzeichnet, dass** entlang des zumindest einen Luftführungskanals (63) zumindest eine Senke (63.1) zur Aufnahme von Kondensat (7) ausgebildet ist.

16. Wärmespeicher (60, 160, 260, 360, 460, 560) nach Anspruch 15, **dadurch gekennzeichnet, dass** im Bereich der Senke (63.1) ein Kondensatablauf (63.1) zu dem Luftführungskanal (63) geführt ist.

17. Wärmespeicher (60, 160, 260, 360, 460, 560) nach einem der Ansprüche 1 bis 16, **dadurch gekennzeichnet, dass** der Wärmespeicher (60, 160, 260, 360, 460, 560) um seine Mittellängsachse (75) drehbar gelagert ist.

18. Wärmespeicher (60, 160, 260, 360, 460, 560) nach einem der Ansprüche 1 bis 17, **dadurch gekennzeichnet, dass** der Wärmespeicher (60, 160, 260, 360, 460, 560) zumindest eine Verdunstungsschicht mit einer großen Oberfläche aufweist und dass die zumindest eine Verdunstungsschicht vorzugsweise aus einem porösen Material gebildet ist.

19. Wärmespeicher (60, 160, 260, 360, 460, 560) nach einem der Ansprüche 1 bis 18, **dadurch gekennzeichnet, dass** die Wärmespeicherschichten (61) aus einem metallischen Werkstoff gebildet sind, besonders bevorzugt dass die Wärmespeicherschichten (61) aus einer Eisenlegierung gebildet sind, ganz besonders bevorzugt dass die Wärmespeicherschichten aus Stahl der Werkstoffnummer 1.1203 gebildet sind.

20. Wärmespeicher (60, 160, 260, 360, 460, 560) nach einem der Ansprüche 1 bis 19, **dadurch gekennzeichnet, dass** die Wärmedämmschicht (62) oder die Wärmedämmschichten (62) aus einem Kunststoff, vorzugsweise aus PTFE, gebildet sind und/oder dass die Wärmedämmschicht (62) oder die Wärmedämmschichten (62) aus einem Klebstoff gebildet sind.

21. Wärmespeicher (60, 160, 260, 360, 460, 560) nach einem der Ansprüche 1 bis 20, **dadurch gekennzeichnet, dass** die Wärmespeicherschichten (62) und die jeweils benachbarte Wärmedämmschicht (62) oder die jeweils benachbarten Wärmedämmschichten (62) miteinander verklebt sind oder dass die Wärmespeicherschichten (62) mittels der Wärmedämmschicht (62) oder der Wärmedämmschichten (62) miteinander verklebt sind.

22. Wärmespeicher (60, 160, 260, 360, 460, 560) nach einem der Ansprüche 1 bis 21, **dadurch gekennzeichnet, dass** die Wärmespeicherschichten (62) und die jeweils benachbarte Wärmedämmschicht (62) oder die jeweils benachbarten Wärmedämmschichten (62) durch eine Spannvorrichtung (164) gegeneinander verspannt sind.

23. Wärmespeicher (60,160, 260, 360, 460, 560) nach einem der Ansprüche 1 bis 22, **dadurch gekennzeichnet, dass** die Wärmedämmschichten (62) des Wärmespeichers (60, 160, 260, 360, 460, 560) gleiche Schichtdicken (72) aufweisen oder dass die Wärmedämmschichten (62) des Wärmespeichers (60, 160, 260, 360, 460, 560) unterschiedliche Schichtdicken (72) aufweisen, bevorzugt dass sich die Schichtdicken (72) der entlang des zumindest einen Luftführungskanals (63) aufeinanderfolgenden Wärmedämmschichten (62) stetig verändern, besonders bevorzugt dass sich die Schichtdicken (72) der entlang des zumindest einen Luftführungskanals (63) aufeinanderfolgenden Wärmedämmschichten (62) in Strömungsrichtung der Wärme abgebenden Luft stetig verkleinern.

24. Wärmespeicher (60, 160, 260, 360, 460, 560) nach einem der Ansprüche 1 bis 23, **dadurch gekennzeichnet, dass** zumindest eine der gegenüberliegenden äußeren Schichten des Wärmespeichers (60, 160, 260, 360, 460, 560) als Wärmedämmschicht (62) ausgebildet.

25. Wärmespeicher (60, 160, 260, 360, 460, 560) nach einem der Ansprüche 1 bis 24, **dadurch gekennzeichnet, dass** die Wärmespeicherschichten (61) jeweils vollständig oder zumindest teilweise von einer Schutzbeschichtung bedeckt sind und dass die Schutzbeschichtung vorzugsweise die benachbarte Wärmedämmschicht (62) oder die benachbarten Wärmedämmschichten (62) bildet.

26. Wärmespeicher (60, 160, 260, 360, 460, 560) nach einem der Ansprüche 1 bis 25, **dadurch gekennzeichnet, dass** der Wärmespeicher (60, 160, 260, 360, 460, 560) an seiner äußeren Oberfläche durch eine Schutzschicht (80) bedeckt ist und/oder dass die Oberflächen des oder der Luftführungskanäle (63) durch eine Schutzschicht (80) bedeckt sind.

27. Wärmespeicher (60,160, 260, 360, 460, 560) nach Anspruch 25 oder 26, **dadurch gekennzeichnet, dass** die Schutzbeschichtung und/oder die Schutzschicht (80) durch einen Klebstoff gebildet ist oder dass die Schutzbeschichtung und/oder die Schutzschicht als Pulverbeschichtung gebildet ist.

28. Wärmespeicher (60,160, 260, 360, 460, 560) nach einem der Ansprüche 25 bis 27, **dadurch gekennzeichnet, dass** die Schutzbeschichtung und/oder die Schutzschicht (80) antimikrobiell wirksam und/oder spülmaschinenfest ausgebildet ist.

29. Raumlufttechnische Lüftungsvorrichtung (1) zur Lüftung von Räumen in Gebäuden, zum Einbau in eine Öffnung (41) einer Gebäudewand (40), mit zumindest einem Ventilator (2) zur Erzeugung eines Luftstroms und mit einem Wärmespeicher (60, 160, 260, 360, 460, 560) nach einem der Ansprüche 1 bis 28, wobei der Luftstrom durch einen oder mehrere Luftführungskanäle (63) des Wärmespeichers (60, 160, 260, 360, 460, 560) geführt ist.

30. Raumlufttechnische Lüftungsvorrichtung (1) nach Anspruch 29, **dadurch gekennzeichnet, dass** die Strömungsrichtung des Luftstroms durch den Luftführungskanal (63) oder die Luftführungskanäle (63) umkehrbar ist.

31. Raumlufttechnische Lüftungsvorrichtung (1) nach Anspruch 29 oder 30, **dadurch gekennzeichnet, dass** der Wärmespeicher (60, 160, 260, 360, 460, 560) zwei oder mehrere Luftführungskanäle (63) aufweist und dass die Strömungsrichtung in einem ersten Anteil der Luftführungskanäle (63) gegenläufig zu der Strömungsrichtung in einem zweiten Anteil der Luftführungskanäle (63) ausgerichtet ist.

32. Raumlufttechnische Lüftungsvorrichtung (1) nach einem der Ansprüche 29 bis 31, **dadurch gekennzeichnet, dass** der Wärmespeicher (60,160, 260, 360, 460, 560) derart um eine parallel zur Strömungsrichtung ausgerichteten Achse und in Abhängigkeit von der vorliegenden Strömungsrichtung drehbar gelagert ist, dass der Wärmespeicher (60, 160, 260, 360, 460, 560) abwechselnd innerhalb einer raumlufttechnischen Lüftungsvorrichtung die Luftströme durchläuft.

33. Raumlufttechnische Lüftungsvorrichtung (1) nach einem der Ansprüche 29 bis 32, **dadurch gekennzeichnet, dass** der Wärmespeicher (60, 160, 260, 360, 460, 560) derart um eine quer zur Strömungsrichtung ausgerichteten Achse und in Abhängigkeit von der vorliegenden Strömungsrichtung drehbar gelagert ist, dass der Wärmespeicher (60, 160, 260, 360, 460, 560) bei wechselnder Strömungsrichtung innerhalb der raumlufttechnischen Lüftungsvorrichtung 1 nur in eine Richtung durchströmt wird.

34. Raumlufttechnische Lüftungsvorrichtung (1) nach einem der Ansprüche 29 bis 33, **dadurch gekennzeichnet, dass** zwischen dem Ventilator (2) und dem Wärmespeicher (60, 160, 260, 360, 460, 560) ein Luftführungsteil (4) mit Kanälen (5) angeordnet ist und dass den Luftführungskanälen (63) des Wärmespeichers (60, 160, 260, 360, 460, 560) der Luftstrom durch die Kanäle (5) des Luftführungsteils (4) zugeführt ist.

35. Raumlufttechnische Lüftungsvorrichtung (1) nach Anspruch 34, **dadurch gekennzeichnet, dass** das Luftführungsteil (4) zwei oder mehrere aufeinanderfolgende Wärmespeicherschichten (61) aufweist, welche gegeneinander durch jeweils zumindest eine Wärmedämmschicht (62) thermisch isoliert sind, und dass die Kanäle (5) durch zumindest einen Teil der Wärmespeicherschichten (61) und die dazwischen angeordnete Wärmedämmschicht (62) oder Wärmedämmschichten (62) geführt ist.

36. Raumlufttechnische Lüftungsvorrichtung (1) nach Anspruch 34 oder 35, **dadurch gekennzeichnet, dass** die dem Luftführungsteil (4) zugewandte Stirnfläche des Wärmespeichers (60) und die dem Wärmespeicher (60) zugewandte Stirnfläche des Luftführungsteils (4) komplementär zueinander geformt sind, vorzugsweise dass die Stirnfläche des Lüftungsteils (4) konvex, besonders bevorzugt halbkugelförmig, und die zugewandte Stirnfläche des Wärmespeichers (60) konkav gewölbt ist.

37. Raumlufttechnische Lüftungsvorrichtung (1) nach einem der Ansprüche 34 bis 36, **dadurch gekennzeichnet, dass** das Luftführungsteil (4) mit dem Ventilator (3) verbunden ist, dass ein Luftfilter (26) mit dem Ventilator (3) verbunden ist, und dass der Ventilator (3), der Filter und das Luftführungsteil (4) derart um eine quer, vorzugsweise senkrecht, zur Förderrichtung des Ventilators (3) verlaufenden Achse schwenkbar sind, dass trotz in ihrer Strömungsrichtung alternierender Luftströmung der Lüftungsvorrichtung der Filter und vorzugsweise auch der Ventilator nur einseitig durchströmt sind.

## Claims

1. A heat accumulator (60, 160, 260, 360, 460, 560) for absorbing heat energy from an air flow and for releasing heat energy to an air flow of a room air-conditioning ventilation device (1), wherein the heat accumulator (60, 160, 260, 360, 460, 560) comprises at least one air guiding channel (63) for guiding the air flow, and wherein the heat accumulator (60, 160, 260, 360, 460, 560) comprises two or more successive heat storage layers (61) which are preferably thermally insulated from one another by at least one heat insulation layer (62);
**characterised in that** the at least one air guiding channel (63) extends through at least part of the heat storage layers (61) and the heat insulation layer (62) or heat insulation layers (62) disposed therebetween; that the heat storage layers (61) are each penetrated by one or more channel passages (66); that the heat insulation layer (62) or the heat insulation layers (62) are each penetrated by one or more channel openings (67); and that the channel passages (66) and the channel openings (67) of the successive heat storage layers (61) and heat insulation layers (62) are aligned with one another so as to define the at least one air guiding channel (63).

2. The heat accumulator (60, 160, 260, 360, 460, 560) according to claim 1, **characterised in that** the heat storage layers (61) are made of a material having a heat capacity in a range from 400 J/(kg·K) to 4200 J/(kg·K).

3. The heat accumulator (60, 160, 260, 360, 460, 560) according to claim 1 or 2, **characterised in that** the heat insulation layer (62) or the heat insulation layers (62) are made of a material having a coefficient of thermal conductivity of less than 0.5 W/(m·K), preferably less than 0.3 W/(m·K).

4. The heat accumulator (60,160, 260, 360, 460, 560) according to any one of claims 1 to 3, **characterised in that** the heat storage layers (61) and the respective adjacent heat insulation layers (62) of the heat accumulator (60, 160, 260, 360, 460, 560) each have contact surfaces arranged with surface-to-surface contact to one another or are joined to one another by a material bond or in a force-fitting manner on contact surfaces thereof.

5. The heat accumulator (60, 160, 260, 360, 460, 560) according to any one of claims 1 to 4, **characterised in that** at least some of the heat storage layers (61) and of the heat insulation layers (62) of the heat accumulator (60, 160, 260, 360, 460, 560) are planar; or that at least some of the heat storage layers (61) and/or of the heat insulation layers of the heat accumulator (60, 160, 260, 360, 460, 560) are curved around an axis; or that at least some of the heat storage layers (61) and/or of the heat insulation layers of the heat accumulator (60, 160, 260, 360, 460, 560) have a domed shape.

6. The heat accumulator (60, 160, 260, 360, 460, 560) according to any one of claims 1 to 5, **characterised in that** the at least one air guiding channel (63) extends rectilinearly through the heat accumulator (60, 160, 260, 360, 460, 560); or that the at least one air guiding channel (63) extends through the heat accumulator (60, 160, 260, 360, 460, 560) along a curved path, preferably a spiral and/or stepped path.

7. The heat accumulator (60, 160, 260, 360, 460, 560) according to any one of claims 1 to 6, **characterised in that** the openings of a channel passage (66) provided on the opposite surfaces of a respective heat storage layer (61) are arranged in alignment with one another with respect to the central longitudinal axis (75) of the heat accumulator (60, 160, 260, 360, 460, 560); or that the openings of a channel passage (66) provided on the opposite surfaces of a respective heat storage layer (61) are laterally offset from one another with respect to the central longitudinal axis (75) of the heat accumulator (60, 160, 260, 360, 460, 560).

8. The heat accumulator (60, 160, 260, 360, 460, 560) according to any one of claims 1 to 7, **characterised in that** the channel passage (66) or the channel passages (66) of a heat storage layer (61) are rectilinear or curved or stepped along their extension.

9. The heat accumulator (60, 160, 260, 360, 460, 560) according to any one of claims 1 to 8, **characterised in that** the channel passage (66) or the channel passages (66) of a heat storage layer (61) each have a consistent cross section between their openings; or that the channel passage (66) or the channel passages (66) of a heat storage layer (61) each have a varying cross section between their openings; and/or that channel passages (66) of a heat storage layer have different cross sections; and/or that channel passages (66) of successive heat storage layers (61) of a heat accumulator (60, 160, 260, 360, 460, 560) which define an air guiding channel (63) have at least in part different cross sections.

10. The heat accumulator (60, 160, 260, 360, 460, 560) according to any one of claims 1 to 9, **characterised in that**, at least in a portion of the heat accumulator (60, 160, 260, 360, 460, 560), neighbouring heat storage layers (61) are designed similarly in terms of the alignment and arrangement of the channel passages (66), and that the heat storage layers (61) are aligned similarly with one another.

11. The heat accumulator (60, 160, 260, 360, 460, 560) according to any one of claims 1 to 10, **characterised in that**, at least in a portion of the heat accumulator (60, 160, 260, 360, 460, 560), neighbouring heat storage layers (61) are designed similarly in terms of the alignment and arrangement of the channel passages (66), and that the heat storage layers (61) are arranged rotated relative to one another circumferentially around the central longitudinal axis (75) of the heat accumulator (60, 160, 260, 360, 460, 560).

12. The heat accumulator (60, 160, 260, 360, 460, 560) according to any one of claims 1 to 11, **characterised in that** at least one positioning mark (64) is provided on each of the heat storage layers (61) and/or on the heat insulation layer(s) (62) of the heat accumulator (60, 160, 260, 360, 460, 560), for mutual alignment of the heat storage layers (61) and/or the heat insulation layer(s) (62) with one another; preferably that the positioning mark (64) is in the form of a recess or a notch.

13. The heat accumulator (60,160, 260, 360, 460, 560) according to any one of claims 1 to 12, **characterised in that** the opposite end faces of the heat accumulator (60, 160, 260, 360, 460, 560) are planar; or that at least one of the opposite end faces of the heat accumulator (60, 160, 260, 360, 460, 560) has a curved shape.

14. The heat accumulator (60, 160, 260, 360, 460, 560) according to any one of claims 1 to 13, **characterised in that** the heat storage layers (61) of the heat accumulator (60, 160, 260, 360, 460, 560) have the same material thickness (71); or that the heat storage layers (61) of the heat accumulator (60, 160, 260, 360, 460, 560) have different material thicknesses (71); preferably that the material thicknesses (71) of the successive heat storage layers (61) along the at least one air guiding channel (63) vary gradually; most preferably that the material thicknesses (71) of the successive heat storage layers (61) along the at least one air guiding channel (63) increase gradually in the flow direction of the heat emitting air.

15. The heat accumulator (60,160, 260, 360, 460, 560) according to any one of claims 1 to 14, **characterised in that** at least one depression (63.1) for accommodating condensate (7) is provided along the at least one air guiding channel (63).

16. The heat accumulator (60,160, 260, 360, 460, 560) according to claim 15, **characterised in that** in the region of the depression (63.1), a condensate drain (63.1) extends to the air guiding channel (63).

17. The heat accumulator (60, 160, 260, 360, 460, 560) according to any one of claims 1 to 16, **characterised in that** the heat accumulator (60, 160, 260, 360, 460, 560) is mounted for rotation about its central longitudinal axis (75).

18. The heat accumulator (60, 160, 260, 360, 460, 560) according to any one of claims 1 to 17, **characterised in that** the heat accumulator (60, 160, 260, 360, 460, 560) has at least one evaporation layer with a large surface area, and that the at least one evaporation layer is preferably made of a porous material.

19. The heat accumulator (60,160, 260, 360, 460, 560) according to anyone of claims 1 to 18, **characterised in that** the heat storage layers (61) are made of a metallic material, more preferably that the heat storage layers (61) are made of an iron alloy, most preferably that the heat storage layers are made of steel of material number 1.1203.

20. The heat accumulator (60, 160, 260, 360, 460, 560) according to any one of claims 1 to 19, **characterised in that** the heat insulation layer (62) or the heat insulation layers (62) are made of a plastic, preferably PTFE, and/or that the heat insulation layer (62) or the heat insulation layers (62) are made of an adhesive.

21. The heat accumulator (60, 160, 260, 360, 460, 560) according to any one of claims 1 to 20, **characterised in that** the heat storage layers (62) and the respective adjacent heat insulation layer (62) or the respective adjacent heat insulation layers (62) are adhesively bonded to one another; or that the heat storage layers (62) are adhesively bonded to one another by the heat insulation layer (62) or the heat insulation layers (62).

22. The heat accumulator (60, 160, 260, 360, 460, 560) according to any one of claims 1 to 21, **characterised in that** the heat storage layers (62) and the respective adjacent heat insulation layer (62) or the respective adjacent heat insulation layers (62) are braced against each other by a clamping means (164).

23. The heat accumulator (60, 160, 260, 360, 460, 560) according to any one of claims 1 to 22, **characterised in that** the heat insulation layers (62) of the heat accumulator (60, 160, 260, 360, 460, 560) have the same layer thicknesses (72); or that the heat insulation layers (62) of the heat accumulator (60, 160, 260, 360, 460, 560) have different layer thicknesses (72), preferably that the layer thicknesses (72) of the successive heat insulation layers (62) vary gradually along the at least one air guiding channel (63), most preferably that the layer thicknesses (72) of the successive heat insulation layers (62) decrease gradually in the flow direction of the heat emitting air along the at least one air guiding channel (63).

24. The heat accumulator (60, 160, 260, 360, 460, 560) according to any one of claims 1 to 23, **characterised in that** at least one of the opposite outer layers of the heat accumulator (60, 160, 260, 360, 460, 560) is a heat insulation layer (62).

25. The heat accumulator (60, 160, 260, 360, 460, 560) according to any one of claims 1 to 24, **characterised in that** the heat storage layers (61) are each completely or at least partially covered by a protective coating, and that the protective coating preferably defines the adjacent heat insulation layer (62) or the adjacent heat insulation layers (62).

26. The heat accumulator (60, 160, 260, 360, 460, 560) according to any one of claims 1 to 25, **characterised in that** the heat accumulator (60, 160, 260, 360, 460, 560) is covered by a protective layer (80) on its outer surface, and/or that the surfaces of the one or more air passages (63) are covered by a protective layer (80).

27. The heat accumulator (60, 160, 260, 360, 460, 560) according to claim 25 or 26, **characterised in that** the protective coating and/or the protective layer (80) is provided by an adhesive, or that the protective coating and/or the protective layer is in the form of a powder coating.

28. The heat accumulator (60,160, 260, 360, 460, 560) according to any one of claims 25 to 27, **characterised in that** the protective coating and/or the protective layer (80) is anti-microbially effective and/or is dishwasher-safe.

29. A room air-conditioning ventilation device (1) for ventilation of rooms in buildings, for being installed in an opening (41) of a building wall (40), comprising at least one fan (2) for generating an airflow, and comprising a heat accumulator (60, 160, 260, 360, 460, 560) according to any one of claims 1 to 28, wherein the air flow is directed through one or more air guiding channels (63) of the heat accumulator (60, 160, 260, 360, 460, 560).

30. The room air-conditioning ventilation device (1) according to claim 29, **characterised in that** the flow direction of the air flow through the air guiding channel (63) or the air guiding channels (63) is reversible.

31. The room air-conditioning ventilation device (1) according to claim 29 or 30, **characterised in that** the heat accumulator (60,160, 260, 360, 460, 560) has two or more air guiding channels (63) and that the flow direction in a first part of said air guiding channels (63) is oriented opposite to the flow direction in a second part of said air guiding channels (63).

32. The room air-conditioning ventilation device (1) according to any one of claims 29 to 31, **characterised in that** the heat accumulator (60, 160, 260, 360, 460, 560) is mounted for rotation about an axis aligned in parallel to the flow direction and depending on the momentary flow direction such that the heat accumulator (60, 160, 260, 360, 460, 560) alternately passes through the air flows in a room air-conditioning ventilation device.

33. The room air-conditioning ventilation device (1) according to any one of claims 29 to 32, **characterised in that** the heat accumulator (60, 160, 260, 360, 460, 560) is mounted for rotation about an axis aligned perpendicular to the flow direction and depending on the momentary flow direction such that the heat accumulator (60,160, 260, 360, 460, 560) is flowed through only in one direction when the flow direction changes in the room air-conditioning ventilation device 1.

34. The room air-conditioning ventilation device (1) according to any one of claims 29 to 33, **characterised in that** an air guiding component (4) with channels (5) is provided between the fan (2) and the heat accumulator (60, 160, 260, 360, 460, 560), and that the air flow is supplied to the air guiding channels (63) of the heat accumulator (60, 160, 260, 360, 460, 560) through the channels (5) of the air guiding component (4).

35. The room air-conditioning ventilation device (1) according to claim 34, **characterised in that** the air guiding component (4) comprises two or more successive heat storage layers (61) which are thermally insulated from each other by at least one heat insulation layer (62), and that the channels (5) extend through at least part of the heat storage layers (61) and the heat insulation layer (62) or heat insulation layers (62) disposed therebetween.

36. The room air-conditioning ventilation device (1) according to claim 34 or 35, **characterised in that** the end face of the heat accumulator (60) facing the air guiding component (4) and the end face of the air guiding component (4) facing the heat accumulator (60) are shaped complementary to one another, preferably that the end face of the ventilation component (4) is convex, most preferably hemispherical, and that the end face of the heat accumulator (60) facing it is concave.

37. The room air-conditioning ventilation device (1) according to any one of claims 34 to 36, **characterised in that** the air guiding component (4) is coupled with the fan (3), that an air filter (26) is coupled with the fan (3), and that the fan (3), the filter, and the air guiding component (4) are pivotable about an axis that extends transversely, preferably perpendicular to the conveying direction of the fan (3) such that the filter and preferably also the fan are flowed through only from one side, despite the alternating flow direction of the air flow of the ventilation device.

## Revendications

1. Accumulateur de chaleur (60, 160, 260, 360, 460, 560) pour l'absorption de l'énergie thermique d'un flux d'air et pour l'émission d'énergie thermique dans un flux d'air d'un dispositif de ventilation pour le conditionnement de l'air ambiant (1), où l'accumulateur de chaleur (60, 160, 260, 360, 460, 560) comprend au moins un canal de guidage de l'air (63) pour le guidage du flux d'air, et où l'accumulateur de chaleur (60, 160, 260, 360, 460, 560) comprend deux ou plus de deux couches d'accumulation de chaleur (61) successives, qui sont isolées thermiquement les unes par rapport aux autres chacune par au moins une couche d'isolation thermique (62), **caractérisé en ce que** l'au moins un canal de guidage de l'air (63) est guidé à travers au moins une partie des couches d'accumulation de chaleur (61) et la couche d'isolation thermique (62) ou les couches d'isolation thermique (62) disposées entre elles, **en ce que** les couches d'accumulation de chaleur (61) sont traversées chacune par un ou plusieurs passages de canaux (66), **en ce que** la couche d'isolation thermique (62) ou les couches d'isolation thermique (62) sont percées chacune par un ou plusieurs perçages de canaux (67), et **en ce que** les passages de canaux (66) et les perçages de canaux (67) des couches d'accumulation de chaleur (61) successives et des couches d'isolation thermique (62) sont orientées les unes par rapport aux autres de façon à former l'au moins un canal de guidage de l'air (63).

2. Accumulateur de chaleur (60, 160, 260, 360, 460, 560) selon la revendication 1, **caractérisé en ce que** les couches d'accumulation de chaleur (61) sont constituées d'un matériau avec une capacité thermique de l'ordre de 400 J/(kg·K) à 4 200 J/(kg·K).

3. Accumulateur de chaleur (60, 160, 260, 360, 460, 560) selon la revendication 1 ou 2, **caractérisé en ce que** la couche d'isolation thermique (62) ou les couches d'isolation thermique (62) sont constituées d'un matériau avec une conductivité thermique inférieure à 0,5 W/(m·K), de préférence inférieure à 0,3 W/(m·K).

4. Accumulateur de chaleur (60, 160, 260, 360, 460, 560) selon l'une des revendications 1 à 3, **caractérisé en ce que** les couches d'accumulation de chaleur (61) et les couches d'isolation thermique (62) respectivement adjacentes de l'accumulateur de chaleur (60, 160, 260, 360, 460, 560) s'appuient les unes contre les autres sur leur surface au niveau de surfaces de contact ou sont reliées entre elles, au niveau de surfaces de contact, par liaison de matière ou par force.

5. Accumulateur de chaleur (60, 160, 260, 360, 460, 560) selon l'une des revendications 1 à 4, **caractérisé en ce qu'**au moins une partie des couches d'accumulation de chaleur (61) et des couches d'isolation thermique (62) de l'accumulateur de chaleur (60, 160, 260, 360, 460, 560) sont réalisées de manière plane ou **en ce qu'**au moins une partie des couches d'accumulation de chaleur (61) et/ou des couches d'isolation thermique de l'accumulateur de chaleur (60, 160, 260, 360, 460, 560) sont réalisées de façon à être courbées chacune autour d'un axe ou **en ce qu'**au moins une partie des couches d'accumulation de chaleur (61) et/ou des couches d'isolation thermique de l'accumulateur de chaleur (60, 160, 260, 360, 460, 560) sont réalisées de manière voûtée.

6. Accumulateur de chaleur (60, 160, 260, 360, 460, 560) selon l'une des revendications 1 à 5, **caractérisé en ce que** l'au moins un canal de guidage de l'air (63) est guidé en ligne droite à travers l'accumulateur de chaleur (60, 160, 260, 360, 460, 560) ou **en ce que** l'au moins un canal de guidage de l'air (63) est guidé sur une trajectoire courbe, de préférence sur une trajectoire en spirale et/ou à paliers, à travers l'accumulateur de chaleur (60, 160, 260, 360, 460, 560).

7. Accumulateur de chaleur (60, 160, 260, 360, 460, 560) selon l'une des revendications 1 à 6, **caractérisé en ce que** les ouvertures, disposées au niveau des surfaces opposées d'une couche d'accumulation de chaleur (61) respective, d'un passage de canal (66), sont disposées de manière alignée entre elles par rapport à l'axe longitudinal central (75) de l'accumulateur de chaleur (60, 160, 260, 360, 460, 560) ou **en ce que** les ouvertures, disposées au niveau des surfaces opposées d'une couche d'accumulation de chaleur (61) respective, d'un passage de canal (66) sont disposées de manière décalée latéralement entre elles, par rapport à l'axe longitudinal central (75) de l'accumulateur de chaleur (60, 160, 260, 360, 460, 560).

8. Accumulateur de chaleur (60, 160, 260, 360, 460, 560) selon l'une des revendications 1 à 7, **caractérisé en ce que** le passage de canal (66) ou les passages de canaux (66) d'une couche d'accumulation de chaleur (61) sont réalisés en ligne droite ou de manière courbée ou avec des paliers.

9. Accumulateur de chaleur (60, 160, 260, 360, 460, 560) selon l'une des revendications 1 à 8, **caractérisé en ce que** le passage de canal (66) ou les passages de canaux (66) d'une couche d'accumulation de chaleur (61) présentent chacun, entre leurs ouvertures, une section transversale constante ou **en ce que** le passage de canal (66) ou les passages de canaux (66) d'une couche d'accumulation de chaleur (61) présentent chacun, entre leurs ouvertures, une section transversale variable et/ou **en ce que** les passages de canaux (66) d'une couche d'accumulation de chaleur présentent différentes sections transversales et/ou **en ce que** les passages de canaux (66), formant un canal de guidage de l'air (63), de couches d'accumulation de chaleur (61) successives d'un accumulateur de chaleur (60, 160, 260, 360, 460, 560) présentent au moins partiellement différentes sections transversales.

10. Accumulateur de chaleur (60, 160, 260, 360, 460, 560) selon l'une des revendications 1 à 9, **caractérisé en ce que** des couches d'accumulation de chaleur (61) adjacentes sont réalisées de manière identique au moins dans une partie de l'accumulateur de chaleur (60, 160, 260, 360, 460, 560) en ce qui concerne l'orientation et la disposition des passages de canaux (66) et **en ce que** les couches d'accumulation de chaleur (61) sont orientées entre elles de manière identique.

11. Accumulateur de chaleur (60, 160, 260, 360, 460, 560) selon l'une des revendications 1 à 10, **caractérisé en ce que** des couches d'accumulation de chaleur (61) adjacentes sont réalisées de manière identique au moins dans une partie de l'accumulateur de chaleur (60, 160, 260, 360, 460, 560) en ce qui concerne l'orientation et la disposition des passages de canaux (66) et **en ce que** les couches d'accumulation de chaleur (61) sont orientées entre elles de manière tournée dans la direction de la circonférence autour de l'axe longitudinal central (75) de l'accumulateur de chaleur (60, 160, 260, 360, 460, 560).

12. Accumulateur de chaleur (60, 160, 260, 360, 460, 560) selon l'une des revendications 1 à 11, **caractérisé en ce que**, au niveau des couches d'accumulation de chaleur (61) et/ou de la couche d'isolation thermique/des couches d'isolation thermique (62) de l'accumulateur de chaleur (60, 160, 260, 360, 460, 560), est disposé un repère de positionnement (64) pour l'orientation des couches d'accumulation de chaleur (61) et/ou de la couche d'isolation thermique/des couches d'isolation thermique (62) entre elles, de préférence **en ce que** le repère de positionnement (64) est conçu comme un évidement ou une encoche.

13. Accumulateur de chaleur (60, 160, 260, 360, 460, 560) selon l'une des revendications 1 à 12, **caractérisé en ce que** les faces frontales opposées de l'accumulateur de chaleur (60, 160, 260, 360, 460, 560) sont réalisées de manière plane ou **en ce qu'**au moins une des faces frontales opposées de l'accumulateur de chaleur (60, 160, 260, 360, 460, 560) est réalisée de manière voûtée.

14. Accumulateur de chaleur (60, 160, 260, 360, 460, 560) selon l'une des revendications 1 à 13, **caractérisé en ce que** les couches d'accumulation de chaleur (61) de l'accumulateur de chaleur (60, 160, 260, 360, 460, 560) présentent les mêmes épaisseurs de matériau (71) ou **en ce que** les couches d'accumulation de chaleur (61) de l'accumulateur de chaleur (60, 160, 260, 360, 460, 560) présentent des épaisseurs de matériau (71) différentes, de préférence **en ce que** les épaisseurs de matériau (71) des couches d'accumulation de chaleur (61) se succédant le long de l'au moins un canal de guidage de l'air (63) varient constamment, plus particulièrement de préférence **en ce que** les épaisseurs de matériau (71) des couches d'accumulation de chaleur (61) se succédant le long de l'au moins un canal de guidage de l'air (63) augmentent constamment dans la direction d'écoulement de l'air dégageant de la chaleur.

15. Accumulateur de chaleur (60, 160, 260, 360, 460, 560) selon l'une des revendications 1 à 14, **caractérisé en ce que**, le long de l'au moins un canal de guidage de l'air (63), est réalisée au moins une dépression (63.1) pour la réception d'un condensat (7).

16. Accumulateur de chaleur (60, 160, 260, 360, 460, 560) selon la revendication 15, **caractérisé en ce que**, au niveau de la dépression (63.1), une évacuation de condensat (63.1) est guidée vers le canal de guidage de l'air (63).

17. Accumulateur de chaleur (60, 160, 260, 360, 460, 560) selon l'une des revendications 1 à 16, **caractérisé en ce que** l'accumulateur de chaleur (60, 160, 260, 360, 460, 560) est logé de manière rotative autour de son axe longitudinal central (75).

18. Accumulateur de chaleur (60, 160, 260, 360, 460, 560) selon l'une des revendications 1 à 17, l'accumulateur de chaleur (60, 160, 260, 360, 460, 560) étant **caractérisé en ce qu'**il comprend au moins une couche d'évaporation avec une grande surface et **en ce que** l'au moins une couche d'évaporation est constituée de préférence d'un matériau poreux.

19. Accumulateur de chaleur (60, 160, 260, 360, 460, 560) selon l'une des revendications 1 à 18, **caractérisé en ce que** les couches d'accumulation de chaleur (61) sont constituées d'un matériau métallique, plus particulièrement de préférence **en ce que** les couches d'accumulation de chaleur (61) sont constituées d'un alliage de fer, encore plus particulièrement de préférence **en ce que** les couches d'accumulation de chaleur sont constituées d'un acier numéro 1.1203.

20. Accumulateur de chaleur (60, 160, 260, 360, 460, 560) selon l'une des revendications 1 à 19, **caractérisé en ce que** la couche d'isolation thermique (62) ou les couches d'isolation thermique (62) sont constituées d'une matière plastique, de préférence de PTFE et/ou **en ce que** la couche d'isolation thermique (62) ou les couches d'isolation thermique (62) sont constituées d'une colle.

21. Accumulateur de chaleur (60, 160, 260, 360, 460, 560) selon l'une des revendications 1 à 20, **caractérisé en ce que** les couches d'accumulation de chaleur (62) et la couche d'isolation thermique (62) respectivement adjacente ou les couches d'isolation thermique (62) respectivement adjacentes sont collées entre elles ou **en ce que** les couches d'accumulation de chaleur (62) sont collées entre elles au moyen de la couche d'isolation thermique (62) ou des couches d'isolation thermique (62).

22. Accumulateur de chaleur (60, 160, 260, 360, 460, 560) selon l'une des revendications 1 à 21, **caractérisé en ce que** les couches d'accumulation de chaleur (62) et la couche d'isolation thermique (62) respectivement adjacente ou les couches d'isolation thermique (62) respectivement adjacentes sont serrées les unes contre les autres à l'aide d'un dispositif de serrage (164).

23. Accumulateur de chaleur (60, 160, 260, 360, 460, 560) selon l'une des revendications 1 à 22, **caractérisé en ce que** les couches d'isolation thermique (62) de l'accumulateur de chaleur (60, 160, 260, 360, 460, 560) présentent les mêmes épaisseurs de couches (72) ou **en ce que** les couches d'isolation thermique (62) de l'accumulateur de chaleur (60, 160, 260, 360, 460, 560) présentent des épaisseurs de couches (72) différentes, de préférence **en ce que** les épaisseurs de couches (72) des couches d'isolation thermique (62) se succédant le long de l'au moins un canal de guidage de l'air (63) varient constamment, plus particulièrement de préférence **en ce que** les épaisseurs de couches (72) des couches d'isolation thermique (62) se succédant le long de l'au moins un canal de guidage de l'air (63) diminuent constamment dans la direction d'écoulement de l'air dégageant de la chaleur.

24. Accumulateur de chaleur (60, 160, 260, 360, 460, 560) selon l'une des revendications 1 à 23, **caractérisé en ce qu'**au moins une des couches extérieures opposées de l'accumulateur de chaleur (60, 160, 260, 360, 460, 560) est conçue comme une couche d'isolation thermique (62).

25. Accumulateur de chaleur (60, 160, 260, 360, 460, 560) selon l'une des revendications 1 à 24, **caractérisé en ce que** les couches d'accumulation de chaleur (61) sont recouvertes chacune entièrement ou au moins partiellement d'un revêtement de protection et **en ce que** le revêtement de protection constitue de préférence la couche d'isolation thermique (62) adjacente ou les couches d'isolation thermique (62) adjacentes.

26. Accumulateur de chaleur (60, 160, 260, 360, 460, 560) selon l'une des revendications 1 à 25, **caractérisé en ce que** l'accumulateur de chaleur (60, 160, 260, 360, 460, 560) est recouvert, au niveau de sa surface externe, d'une couche de protection (80) et/ou **en ce que** les surfaces du ou des canaux de guidage de l'air (63) sont recouverts d'une couche de protection (80).

27. Accumulateur de chaleur (60, 160, 260, 360, 460, 560) selon la revendication 25 ou 26, **caractérisé en ce que** le revêtement de protection et/ou la couche de protection (80) est constituée d'une colle ou **en ce que** le revêtement de protection et/ou la couche de protection est constituée d'un revêtement en poudre.

28. Accumulateur de chaleur (60, 160, 260, 360, 460, 560) selon l'une des revendications 25 à 27, **caractérisé en ce que** le revêtement de protection et/ou la couche de protection (80) est conçu de manière antimicrobienne et/ou résistante au lave-vaisselle.

29. Dispositif de ventilation pour le conditionnement de l'air ambiant (1) pour la ventilation de pièces dans des bâtiments, destiné à être encastré dans une ouverture (41) du mur d'un bâtiment (40), avec au moins un ventilateur (2) pour la production d'un flux d'air et avec un accumulateur de chaleur (60, 160, 260, 360, 460, 560) selon l'une des revendications 1 à 28, où le flux d'air est guidé à travers un ou plusieurs canaux de guidage de l'air (63) de l'accumulateur de chaleur (60, 160, 260, 360, 460, 560).

30. Dispositif de ventilation pour le conditionnement de l'air ambiant (1) selon la revendication 29, **caractérisé en ce que** la direction d'écoulement de l'air du flux d'air à travers le canal de guidage de l'air (63) ou les canaux de guidage de l'air (63) est réversible.

31. Dispositif de ventilation pour le conditionnement de l'air ambiant (1) selon la revendication 29 ou 30, **caractérisé en ce que** l'accumulateur de chaleur (60, 160, 260, 360, 460, 560) comprend deux ou plus de deux canaux de guidage de l'air (63) et **en ce que** la direction d'écoulement dans une première partie des canaux de guidage de l'air (63) est orientée de manière opposée à la direction d'écoulement dans une deuxième partie des canaux de guidage de l'air (63).

32. Dispositif de ventilation pour le conditionnement de l'air ambiant (1) selon l'une des revendications 29 à 31, **caractérisé en ce que** l'accumulateur de chaleur (60, 160, 260, 360, 460, 560) est logé de manière rotative autour d'un axe orienté parallèlement à la direction d'écoulement et en fonction de la direction d'écoulement existante de façon à ce que l'accumulateur de chaleur (60, 160, 260, 360, 460, 560) traverse de manière alternée les flux d'air à l'intérieur d'un dispositif de ventilation pour le conditionnement de l'air ambiant.

33. Dispositif de ventilation pour le conditionnement de l'air ambiant (1) selon l'une des revendications 29 à 32, **caractérisé en ce que** l'accumulateur de chaleur (60, 160, 260, 360, 460, 560) est logé de manière rotative autour d'un axe orienté transversalement par rapport à la direction d'écoulement et en fonction de la direction d'écoulement existante de façon à ce que l'accumulateur de chaleur (60, 160, 260, 360, 460, 560) soit traversé dans une seule direction tandis que la direction d'écoulement varie à l'intérieur du dispositif de ventilation pour le conditionnement de l'air ambiant 1.

34. Dispositif de ventilation pour le conditionnement de l'air ambiant (1) selon l'une des revendications 29 à 33, **caractérisé en ce que**, entre le ventilateur (2) et l'accumulateur de chaleur (60, 160, 260, 360, 460, 560), est disposé une partie de guidage de l'air (4) avec des canaux (5) et **en ce que** le flux d'air est introduit dans les canaux de guidage de l'air (63) de l'accumulateur de chaleur (60, 160, 260, 360, 460, 560) à l'aide des canaux (5) de la partie de guidage de l'air (4).

35. Dispositif de ventilation pour le conditionnement de l'air ambiant (1) selon la revendication 34, **caractérisé en ce que** la partie de guidage de l'air (4) comprend deux ou plus de deux couches d'accumulation de chaleur (61) successives, qui sont isolées thermiquement les unes par rapport aux autres respectivement par au moins une couche d'isolation thermique (62), et **en ce que** les canaux (5) sont guidés à travers au moins une partie des couches d'accumulation de chaleur (61) et la couche d'isolation thermique (62) ou les couches d'isolation thermique (62) disposés entre elles.

36. Dispositif de ventilation pour le conditionnement de l'air ambiant (1) selon la revendication 34 ou 35, **caractérisé en ce que** la face frontale, orientée vers la partie de guidage de l'air (4), de l'accumulateur de chaleur (60) et la face frontale, orientée vers l'accumulateur de chaleur (60), de la partie de guidage de l'air (4) présentent des formes complémentaires, de préférence **en ce que** la face frontale de la partie de guidage de l'air (4) est convexe, plus particulièrement de préférence de forme hémisphérique, et la face frontale de l'accumulateur de chaleur (60) est bombée de manière concave.

37. Dispositif de ventilation pour le conditionnement de l'air ambiant (1) selon l'une des revendications 34 à 36, **caractérisé en ce que** la partie de guidage de l'air (4) est reliée avec le ventilateur (3), **en ce qu'**un filtre à air (26) est relié avec le ventilateur (3), et **en ce que** le ventilateur (3), le filtre et la partie de guidage de l'air (4) peuvent pivoter autour d'un axe s'étendant transversalement, de préférence perpendiculairement, par rapport à la direction de transport du ventilateur (3), de façon à ce que, malgré un écoulement d'air alterné, en ce qui concerne la direction d'écoulement, du dispositif de ventilation, le filtre et de préférence également le ventilateur soient traversés d'un seul côté.
